# EUROPEAN PATENT SPECIFICATION

(11) **EP 1 828 650 B1**
(45) Date of publication and mention of the grant of the patent: **05.03.2014**
(21) Application number: 04822647.6
(22) Date of filing: 19.11.2004
(51) Int. Cl.: F16K 5/04, F16K 5/22, B24C 3/02, B24C 11/00, F16K 49/00

(54) **ROTARY VALVE FOR INDUSTRIAL FLUID FLOW CONTROL**
DREHSCHIEBER FÜR TECHNISCHE DURCHFLUSSREGELUNG
VANNE ROTATIVE POUR COMMANDER L'ÉCOULEMENT D'UN FLUIDE INDUSTRIEL

(43) Date of publication of application: 05.09.2007
(73) Proprietor: Mitton Valve Technology Inc., Brantford, ON N3S 7H5 (CA)
(72) Inventor: MITTON, Michael Jon, Brantford, Ontario N3S 7H5 (CA); MCLEAN, Marshall James Douglas, Brantford, Ontario N3R 1S1 (CA); GROSU, Viorel, Brantford, Ontario N3S 4M2 (CA)
(74) Representative: Boeckh, Tobias
(86) International application number: PCT/CA2004/001999
(87) International publication number: WO 2006/053414

(56) References cited:
- EP-A1- 1 113 203
- WO-A1-99/20925
- WO-A1-03/036144
- US-A- 1 493 133
- US-A- 5 706 851
- US-A- 5 911 212

## Description

### FIELD OF THE INVENTION

The present invention relates to a rotary valve with a cylindrical valve shaft and valve housing to control or affect fluid flow, also to control or affect fluid flow in processes where the fluid temperature must be maintained within a target range, the fluid pressure is varied and/or the amount of fluid flow is controlled.

### BACKGROUND OF THE INVENTION

Valves are a well known part of industrial, research and residential fluid flow processes, where the valve either inhibits (e.g, in the case of a stop valve), regulates (e.g., in the case of a check valve) or affects (e.g. in creating or dampening pressure pulses in the fluid) the flow of fluid in a system. Between the input and output directions of the valve, the shape and seal of the valve gate determines many of the functions and properties of the valve.

Prior industrial applications requiring fluid flow control have typically depended on either poppet, spool, butterfly or ball valves to either control or stop the flow. Each of these valves has certain performance problems that can be overcome by using a properly calibrated rotary valve.

Rotary valves of various shapes have been used to control flow in a system. The valve gate may be spherical with a passage through a diameter of the gate or on its periphery. The valve gate may also be cylindrical in shape with passages through the diameter or periphery. In either case, flow is controlled by rotating the valve gate through a sufficient number of degrees (typically 90°) so that the passage no longer provides fluid communication between the input and output ports of the valve housing.

Within the field of rotary valves, while the spherical shape of a ball valve does have the benefit of being able to provide a firm seal in a variety of ring shaped seals, the shape of the ball valve has other disadvantages. The maximum width of a spherical rotary valve extends beyond the rest of the gate and is exposed to disproportionate wear as compared to the remainder of the valve gate. The maximum width area is also more greatly affected by temperature differentials between the fluid and the valve. When used in a series of valves, or in a manifold, spherical valve gates must be mounted on a shaft. Consequently, mounting the multiple valve gates results in a less efficient seal compared to a single ball valve.

Spherical valves, or indeed any valves, mounted on a shaft have known heat transfer limitations and mechanical limitations at the point of connection between the parts. As the temperature of the valve fluctuates, the fit is distorted between the sealing material and valve shaft.

US 5,911,212 discloses a priority valve for use with a turbocharger wherein the valve comprises a cylindrical valve member that is positioned in a housing to turn between a first position, where the charge air flow, that is received from the turbocharger unit, is directed to the engine intake manifold, and a second position where the received charge air flow is first directed to the intercooler, with that flow passed back to the priority valve from the intercooler and is then passed from the priority valve into the line to the engine intake manifold. A preferred valve member formation is accomplished by machining a longitudinal section from half the cylinder, to form a curved face with concave sections.

US 5706851 describes a plug valve structure for use in environments where granular abrasive materials are handled. The described plug valve comprises a cylindrical housing with one mostly closed end and a removable cover bolted to the other end and being sized to position the cylindrical plug member therein. US 5706851 also discloses a replaceable wear member which is fitted with close tolerances within said housing between the cylindrical body and the plug. The housing further includes second cylindrical concentric shapes having a common axis perpendicularly intersecting the axis of the first cylindrical body.

Cylindrical valves have the advantage that they can be machined directly into the valve shaft. This reduces the number of parts in the valve - especially where many valves need to be cut on the same shaft. There is a need for a cylindrical valve shaft with improved temperature control, so that manufacturing efficiencies of using the pipe shape and fewer pieces may be realized.

The rotational axis of a cylindrical valve is perpendicular to the direction of flow of the fluid being controlled which also affords advantages over non-rotating valves. In addition to the need for a cylindrical stop valve with a firm seal, there is a need for a cylindrical valve that regulates or affects the flow of fluid over a range of fluid flow rates.

There is also a need for a valve that can create predictable pulses or waves of fluid in a timed sequence relative to other events in an industrial process.

The dynamic shape of the passage through the valve as it rotates through ranges of open positions has a dramatic effect on the flow (or lack thereof) of fluid through the valve. There is a need to optimize the shape of the valve passage to achieve desired fluid flow properties during the rotation of the shaft or while the shaft is in a static open position.

Dry Ice Blasting is the process of cleaning by blasting a surface with granules of solidified CO2. These granules are propelled by compressed air which is accelerated through a nozzle. To date, the compressed air has been provided in a continuous stream to the dry ice creating pressure build up, noise, ice loss and air loss. The noise in these devices is sufficient to present occupational health and safety concerns. There is a particular need to control air flow in these devices in an accurate adjustable way.

### SUMMARY OF THE INVENTION

To address the problems noted above, this invention provides a number of modifications to existing cylindrical valves, which alone, or in combination, create a new and useful configurable valve system.

Various aspects of the invention include features or elements comprising one or more of the following elements alone or in combination: (i) the use of temperature control bores in the valve shaft, (ii) the contoured or tapered shapes of the conduits, (iii) the use of the valve to create predictable pulses or waves in the fluid being controlled, (iv) a modular system of valves where the valve body is fixed and the valve shaft is

replaceable with a second valve shaft of different conduit shape, (v) a rotary valve with multiple inputs or multiple outputs for either mixing or diverting of input fluids, and (vi) the use of the valve in abrasive particulate blasting and in particular dry ice blasting.

This invention provides for a cylindrical rotary valve comprising a cylindrical valve shaft within a valve body. The valve body defines at least one input port and at least one output port, each port providing a separate fluid communication path between the outer surface of the valve body and a cylindrical bore extending longitudinally through the valve. The longitudinal bore is sized to accept the valve shaft. The shaft rotates between various positions to either promote or inhibit the degree of fluid communication between the input port and the output port.

The cylindrical valve shaft has one or more contoured conduits provided along a circumferential segment of the valve shaft. The conduit may be provided as a groove, bore, cut or other suitable channel or defined fluid path over an arcuate section on the outer surface of the valve shaft. In operation, the inner wall of the cylindrical bore in the valve housing also bounds the conduit. As the cylindrical valve shaft rotates within the valve body, the shaft will come into an open position with respect to a particular conduit such that said conduit on the cylindrical valve shaft brings at least one input port in the valve body into fluid communication with at least one output port in the valve body. When said conduit is no longer simultaneously in fluid communication with at least two ports, the valve is in the closed position with respect to said conduit.

In one aspect of the invention, one or more hollow cores (i.e. temperature control bores) are provided in the valve shaft. The temperature control bores are not in fluid communication with the one or more conduits provided on the outer surface of the valve shaft. The temperature control bores define a second fluid path along the longitudinal axis of the valve shaft for thermally conductive fluid of predetermined temperature to flow. The temperature control bores which extend along the axis may be parallel, coaxial, or offset relative to the longitudinal axis. It would also be considered within the scope of the present invention for the temperature control bore or bores (which extend along the axis) to have a circuitous path through the shaft, provided that the bores did not provide fluid communication with the transverse fluid conduits on the outer surface of the valve shaft.

The thermally conductive fluid is used to either cool or heat the valve shaft, so as to control the thermal expansion or contraction of the valve or to achieve a particular thermodynamic effect in the fluid whose flow is being controlled. Since the valve shaft is cylindrical in shape, and not spherical, the unmodified outer surface of the cylindrical valve shaft can be at a constant distance from an axial temperature control bore. This allows for substantially reliable and even heat transfer and temperature control along the length of the valve shaft.

In another aspect where temperature control bores are provided in the valve shaft, the bores are further provided with a thermally conductive solid heating or cooling element to control the temperature of the valve shaft.

Since a cylindrical valve shaft is used, it is easy to machine the one or more conduits and the hollow core directly into the shaft itself rather than machining the conduits into a separate valve component, which latter component would then be mounted on a separate valve shaft.

Often, the shapes of the conduits are important factors in determining the flow properties of the fluid being controlled. In another aspect of the present invention, the conduits have a smoothly contoured topography with respect to the valve shaft and the first cylindrical through bore in the valve body. The width and depth of the conduits determine the amount of the first fluid that may flow between the input port and output port for a given viscosity, input pressure, output pressure and valve angular velocity. The valve shaft rotates within a range of open positions in which the input port and output port at issue are connected by the conduit for fluid communication. The range may comprise: a partially open position wherein the at least one output port is only partially exposed to the conduit, a fully open position wherein the at least one input port and the at least one output port are fully exposed to the conduit, and a partially closed position wherein the at least one input port is only partially exposed to the conduit. In the partially open position and the partially closed position, the section of the conduit adjacent to the partially exposed port (i.e. the endwall of the conduit) may have a different contoured topography or shape from the rest of the conduit to achieve a particular effect. For example, in some instances, it may be desirable to select a particular topography to facilitate calibration of fluid flow through a particular valve over a broad range of operative positions. Of course, other topographies may be selected to achieve other objectives.

In some instances of the present invention, the topography is defined by a first convex endwall connecting the outer surface smoothly with a concave conduit face, itself connecting smoothly to a second convex endwall. The endwalls and conduit face may be connected smoothly to prevent unwanted disturbance in the flow. The endwalls may be bevelled, chamfered or radiused to inhibit shear in a controlled fluid at the region of the conduit where the ports approach the valve shaft. In some embodiments, the end walls are convex out in the region where they join the unmodified smooth outer surface of the valve shaft. In order to be connected smoothly to the remainder of the conduit face, the curvature of the endwall changes as it approaches the conduit face. The shape of the conduit face and its distance from the cylindrical bore determines the cross sectional area profile of the conduit in the direction perpendicular to the flow. If the cross sectional area profile is constant, there is less pressure variance along the flow and therefore less overall pressure loss of the controlled fluid within the valve; this feature can be used to minimize pressure loss of the controlled fluid within the valve.

The first convex endwall, concave conduit face and second convex endwall may all be bounded longitudinally by a pair of parallel side walls. In other embodiments, the endwalls and conduit face are radiused so that separate sidewalls are not apparent

In other instances where the shape of the conduit is important, the conduit topography comprises a tapered section that can register with the at least one output port when the shaft is in the open position. As the shaft is rotated while the tapered section registers with the at least one output port a minimum cross sectional area in the conduit, i.e. the narrowest opening in the conduit, is defined by an opening between the tapered section and the output port. The minimum cross sectional area varies in a predetermined non-linear relationship to the amount of shaft rotation in degrees. Where the shape of the opening between the tapered section and the output port defines a triangle, the non-linear relationship is a squared relationship. Different shapes of the tapered section will achieve different ranges for fluid control within predetermined tolerances, and such variations are considered within the scope of this invention.

In other embodiments of the invention, the valve is capable of creating a pulse or wave in the controlled fluid flow. In such embodiments, the valve shaft is operable at a predetermined frequency of rotation. The one or more first fluid conduits each define a first opening for fluid communication between the at least one input port and at least one output port. Registration of the conduit with the ports does not require total alignment of the parts for fluid communication to occur. For every angular or rotational position of the valve shaft, the profile of the fluid path through the conduit also changes. The profile is defined by the cross sectional area at each point along the flow path. The minimum cross sectional area at a given rotational position of the valve shaft has a significant impact on total fluid flow and pressure loss between the input and output ports. For a given rotational position, the size of the opening between an input and an output will be the minimum cross sectional area along all branches of the fluid path.

As the valve shaft rotates, the one or more first fluid conduits sequentially bring the at least one input port and the at least one output port through a fluid communication cycle consisting of: (i) a state of an increasing fluid flow; (ii) a state of maximum fluid flow; (iii) a state of decreasing fluid flow, and (iv) a state of minimum fluid flow.

In some instances, there may be a plurality of first fluid conduits equidistantly spaced about the valve shaft, and the plurality of first fluid conduits may also be of like size and configuration. When the state of minimum fluid flow is not zero, we refer to the valve as a wave valve. When the state of minimum fluid flow is zero fluid flow, or no fluid flow, we refer to the valve as a pulse valve.

Preferentially, the valve body also has, integrated into its structure, supports for the valve shaft to control deflection along the valve shaft so as to either maintain a consistent leak resistant seal at the port seals or to minimize friction as the valve rotates depending on whether deflection is allowed or prevented. In a preferred embodiment, the cylindrical valve may be designed to rotate within the valve body on wear resistant materials. For example, such a design could be used to avoid metal to metal contact, or other contact between wear-prone materials. Circumferential seals on the cylindrical valve shaft and port seals surrounding the intake port and output port region on the valve body may provide leak prevention and also act as bearings for the cylinder valve shaft as it rotates within the valve body. Alternatively, a tightly fitting valve may be coated with, or created from, a self lubricating or self sealing material.

The embodiments of the invention include aspects having one or more of the following features: (1) a single conduit, double port valve with temperature control passage; (2) a multiple conduit, double port pulse valve; (3) a multiple conduit, double port wave valve; (4) a single conduit, triple port diverter valve; and (5) a single conduit, triple port mixing valve. It would be readily apparent to those of skill in the art that any of these embodiments may be configured with a plurality of conduit-port section registered in a timed sequence along the shaft axis, also known as a valve train.

These valves may be used in a wide variety of applications, with a wide variety of benefits, which may include, but are not limited to one or more of, reduced pressure loss in the valve, vibration reduction, noise reduction, reduced wear and friction, ease of cleaning, reduced manufacturing costs, reduced number of parts, less maintenance, faster and more accurate valve timing, ease of replacement of parts and calibration of systems by changing only the valve shaft.

The present invention also encompasses the replaceable nature of the shafts, referred to as a modular cylindrical rotary valve system. In general, this system comprises a valve body and a replaceable first cylindrical valve shaft positioned coaxially within the first cylindrical bore. The outer surface of the first cylindrical valve shaft defines a first conduit profile. A conduit profile denotes the cross sectional area of the conduit relative to the direction of flow for a given rotational position of the shaft. The first cylindrical valve shaft is replaceable with a second cylindrical valve shaft defining a distinguishable second conduit profile when positioned within the valve body. When such a valve body is used in an industrial process, the flow properties at that point in the process can be easily altered by simply replacing the first valve shaft with a second valve shaft whose conduit profile may be preferable.

In certain applications, it may be desirable to create a predictable wave pattern in fluid flow for efficient mixing of different streams, including in high pressure applications. The device of the present invention with a pulse type or wave type valve shaft can be used to reliably control the predictable wave pattern, or benefit from the resultant efficiencies and properties of the controlled fluid flow. When used to regulate the air flow in particulate blasting applications, and in particular dry ice blasting, the pulse valve of the present invention can be used to provide marked noise reduction, and reduced abrasive particulate comsumption and reduced air consumption while achieving an equivalvent blasting effect.

The creation of a wave in the air flow of the particulate dry-ice blaster also provides the opportunity for further sound dampening by using standing wave sound dampeners tuned to the frequency of the rotary valve.

Other fluid flow applications requiring dynamically controlled fluid flow can substantially benefit from the use of certain embodiments of the present invention.

Various valve embodiments of the present invention produce one or more advantages over current valving systems typically used in the prior art. By way of example, the simplified construction of the rotary valve (one piece) allows for improved heat distribution throughout the valve, which is not easily achieved in valves where each valve is machined separately and fitted over a valve shaft; the wave valve has particular uses in applications where fluid pressure and volume must be varied continually in a system without entirely stopping flow; the modular design allows for ease of replacement and therefore ease of modification of entire processes by replacing only the valve shaft. In certain aspects, valves can be pre heated at process start up to ensure proper functioning of the valve and the correct temperature can be maintained during the process to prevent either excessive thermal expansion or compression and related valve jamming or leakage.

In some embodiments, the conduit may be shaped for adjustable mixing of two input fluids or distribution of two output fluids.

In some embodiments, referred to as diverter valves, a valve body defines an input port, a first output port and a second output port. Each port provides a separate fluid communication path between an outer surface of the valve body and a first cylindrical bore extending along a longitudinal axis defined by the valve body. A cylindrical valve shaft is coaxially positioned within the first cylindrical bore, and has an outer surface defining a first fluid conduit. The first fluid conduit is shaped so that the valve shaft can be rotated between: (i) a first open position with fluid communication between the input port and the first output port, (ii) a second open position with fluid communication between the input port and the second output port, and (iii) a closed position restricting fluid communication between the input port and both of the two output ports.

In some embodiments, referred to as mixing valves, a valve body defines a first input port, a second input port and an output port. Each port provides a separate fluid communication path between an outer surface of the valve body and a first cylindrical bore extending along a longitudinal axis defined by the valve body. A cylindrical valve shaft is coaxially positioned within the first cylindrical bore, and has an outer surface defining a first fluid conduit. The first fluid conduit is shaped so that the valve shaft can be rotated between: (i) a closed position for restricting fluid communication between the output port and both of the two input ports, (ii) a range of positions for mixing various proportions of fluid streams communicating via the first and second input ports, for fluid communication with the output port, and (iii) a first fully biased position for fluid communication between the output port and the first input port, and a second fully biased position for fluid communication between the output port and the second input port.

### BRIEF DESCRIPTION OF THE DRAWINGS

Figure 1 shows a perspective view of a single input and single output embodiment of the invention, in which the single input and single output have an angular displacement of 90 degrees.
Figure 2 shows an exploded perspective view of the embodiment in Figure 1 having an on/off type valve shaft with a temperature control passage.
Figure 3 shows a cross sectional view in perspective of the valve in Figure 2 in the direction of markings A-A of Figure 1 and perpendicular to the axis of rotation of the valve.
Figure 4 shows a cross sectional front view in the direction A-A of Figure 1 of the embodiment in Figure 2 with the valve shaft rotated to the open position (Valve Open), and Figure 5 shows the same embodiment with a corresponding view of the valve shaft rotated to the closed position (Valve Closed).
Figure 6 shows a perspective view of an on/off type valve shaft for use in the embodiment of Figure 1 in which the conduit has a constant annular shape along an arcuate portion of the shaft.
Figure 7 shows a cross sectional perspective view of the valve shaft of Figure 6 along section A-A and perpendicular to the axis of rotation of the valve.
Figure 8 shows a perspective view of an on/off type valve shaft for use in the embodiment of Figure 1 in which the conduit opens outwardly from the valve shaft.
Figure 9 shows a cross sectional perspective view of the valve shaft of Figure 8 along section A-A and perpendicular to the axis of rotation of the valve.
Figure 10 shows a perspective view of an on/off type valve shaft for use in the embodiment of Figure 1 in which an arcuate bevelled conduit opens outwardly from the valve shaft.
Figure 11 shows a cross sectional perspective view of the valve shaft of Figure 10 along section A-A and perpendicular to the axis of rotation of the valve.
Figure 12 shows a perspective view of an on/off type valve shaft for use in the embodiment of Figure 1 in which an annular conduit with outwardly scalloped and bevelled ends opens outwardly from the valve shaft.
Figure 13 shows a cross sectional perspective view of the valve shaft of Figure 12 along section A-A and perpendicular to the axis of rotation of the valve.
Figure 14 shows a perspective view of an on/off type valve shaft for use in the embodiment of Figure 1 in which the conduit is cut with a semicircular cross section along an arcuate section of the shaft, with a curved quarter-sphere shaped cut at both ends of the conduit.
Figure 15 shows a cross sectional perspective view of the valve shaft of Figure 14 along section A-A and perpendicular to the axis of rotation of the valve.
Figure 16 shows a perspective view of an on/off type valve shaft for use in the embodiment of Figure 1 in which the conduit has a tapered end.
Figure 17 shows a cross sectional perspective view of the valve shaft of Figure 16 along section A-A and perpendicular to the axis of rotation of the valve.
Figure 18 shows an exploded view of another variant of the embodiment of Figure 1 provided with a pulse type valve shaft, with three crescent shaped conduits.
Figure 19 shows a cross sectional perspective view of the assembled embodiment of Figure 18 along section A-A of Figure 18 and perpendicular to the axis of rotation of the valve.
Figure 20 and Figure 21 each show a cross sectional front view of the embodiment of Figure 19 in which the valve shaft has been rotated to an open position (Open) and closed position (Closed) respectively.
Figure 22 shows a transparent perspective view of a pulse type valve shaft for use in another embodiment of the invention in which two symmetrically opposed, annular conduits are provided on the valve shaft.
Figure 23 shows a cross sectional perspective view of the valve shaft of Figure 22 along section A-A and perpendicular to the axis of rotation of the valve.
Figure 24 shows a transparent perspective view of a pulse type valve shaft for use in another variant of the embodiment of Figure 1 in which three symmetrical annular conduits are equally spaced about the valve shaft.
Figure 25 shows a cross sectional perspective view of the valve shaft of Figure 24 along section A-A and perpendicular to the axis of rotation of the valve.
Figure 26 shows a perspective view of a pulse type valve shaft for use in the embodiment of Figure 1 in which two symmetrically positioned conduits with constant width, along an offset radial arc, and with bevelled ends are positioned on either side of the valve shaft.
Figure 27 shows a cross sectional perspective view of the valve shaft of Figure 26 along section A-A and perpendicular to the axis of rotation of the valve.
Figure 28 is a graph showing the relative through put of a variant of the embodiment of Figure 1 comprising the pulse type valve shaft of Figure 23, as the valve shaft is rotated through 360 degrees, with tight clearance (well sealed).
Figure 29 is a graph showing the relative through put of the a variant of the embodiment of Figure 1 comprising the pulse type valve shaft of Figure 25, as a well sealed valve shaft is rotated through 360 degrees.
Figure 30 shows a perspective view of a wave type valve shaft for use in the embodiment of Figure 1 in which three symmetrical, outwardly opening primary conduits have a surface with constant width along arcuate portions of the valve shaft, with interconnecting semicircular grooves cut between the primary conduits to create an offset.
Figure 31 shows a cross sectional perspective view of the wave type valve shaft of Figure 30 along section A-A and perpendicular to the axis of rotation of the valve.
Figure 32A shows a cross sectional perspective view of another embodiment of the invention provided with a wave type valve shaft in the direction A-A and perpendicular to the axis of rotation of the valve. Figure 32B shows the same view as Figure 32A in which the valve shaft has been rotated to a different position.
Figure 33 is a graph showing the relative throughput of an embodiment of Figure 1 comprising the three conduit offset wave type valve shaft of Figure 30.
Figure 34 shows a perspective view of another embodiment comprising a three port valve.
Figure 35 shows an exploded view of the embodiment of Figure 34 provided with a diverter type valve shaft with multiple temperature control cores.
Figure 36 shows a cross sectional perspective view of the assembled embodiment of Figure 35 along section A-A of Figure 34 and perpendicular to the axis of rotation of the valve.
Figure 37, Figure 38 and Figure 39 each respectively show a cross sectional front view of the diverter valve of Figure 36 in which: the valve shaft has been rotated to an open position between the input and a first output (Outlet A); the valve shaft has been rotated to an open position between the input and a second output (Outlet B); and the valve shaft has been rotated to a closed position (Closed).
Figure 40 shows a perspective view of another embodiment of the invention comprising a three port valve configured for mixing.
Figure 41 shows an exploded view of the embodiment of Figure 40 provided with a mixing type valve shaft.
Figure 42 shows a cross sectional perspective view along section A-A and perpendicular to the axis of rotation of the valve of the assembled embodiment of Figure 41.
Figure 43 shows a front sectional view of the embodiment of Figure 42 in which the mixing type valve shaft has been rotated to an even mixing position, with balanced alignment of flows via Input A and Input B, and an evenly mixed flow via the output.
Figure 44 shows a front sectional view of the embodiment in Figure 42 in which the mixing type valve shaft has been rotated to a fully open position between Input A and the output, and a fully closed position between Input B and the output representing a 100% Bias.
Figure 45 shows a front sectional view of the embodiment in Figure 42 in which the mixing type valve shaft has been rotated to a closed position.
Figure 46 shows a perspective view of a mixing type valve shaft for use in the of the embodiment of Figure 40 in which the conduit is cut with constant width and a crescent convex bottom surface around an arcuate portion of the valve shaft.
Figure 47 shows a cross sectional perspective view of the valve shaft of Figure 46 along section A-A and perpendicular to the axis of rotation of the valve.
Figure 48 shows a perspective view of a mixing type valve shaft for use in the embodiment of Figure 40 in which the surface of the conduit has constant width and two sections cut along separate offset radial arcs joined at a rounded edge.
Figure 49 shows a cross sectional perspective view of the valve shaft of Figure 48 along section A-A and perpendicular to the axis of rotation of the valve.
Figure 50 shows a perspective view of a mixing type valve shaft for use in the embodiment of Figure 40 in which the conduit is cut with constant width and two flat faces joined at a rounded edge.
Figure 51 shows a cross sectional perspective view of the valve shaft of Figure 50 along A-A and perpendicular to the axis of rotation of the valve.
Figure 52 is a schematic depiction of an embodiment of the invention in a dry ice blasting apparatus.

### DETAILED DESCRIPTION OF THE INVENTION

### Embodiment 1: One Input One Output Cylindrical Rotary Valve as On/Off Valve

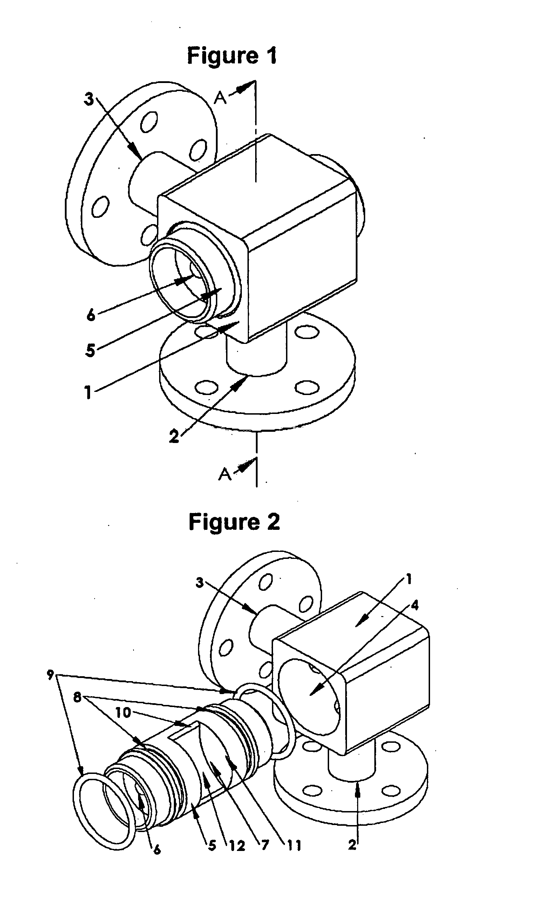

Figure 1 and Figures 2 through 17 depict a first embodiment of the invention, namely a one input and one output configurable valve in use as a on/off (stop) valve.

Figure 1 shows two port valve body 1 with inserted valve shaft 5. The valve body 1 has interchangeable input pipe 2 and output pipe 3, shown in this embodiment to be at 90 degrees from each other. The valve body houses a standard size valve shaft 5, with optional temperature control bore 6. To maintain the generality of the invention, the drive means for the valve is not shown, although a variety of accurate and robust means to control the rotation of the shaft will be known to those of skill in the art, who will be in a position to determine an appropriate drive means compatible with the tolerances of the proposed use. Also not shown is the specific element used to connect the temperature control core 6 with the temperature control fluid. There are well known means to attach a rotating pipe in fluid communication with a non-rotating fluid container; and those of skill in the art will choose the method appropriate to their use.

Figure 2 is an exploded view of the valve in Figure 1 showing the hollow 4 in the valve body 1 sized to accept a standard radius cylindrical valve shaft. This particular valve shaft 5 has seal channels 8 extending about the entire circumference of the shaft to accept radial seals 9. The seals and seal grooves are not essential, where the valve shaft 5 has a radius approximating that of the hollow 4, and the valve is made of self lubricating or self sealing material. Where provided, the temperature control core 6 can be used to maintain the valve shaft size within strict limits to provide as tight a sliding fit as possible. Alternatively, seals can be provided as caps at the opposite ends of the valve shaft. Once the valve size and the relative positions of the input pipe 2 and output pipe 3 are chosen, the conduit 7 on the valve shaft 5 determines how it will function in various positions. In its most generic form, the topography of the conduit 7 is determined by the end walls 10, side walls 11, and conduit face 12 of the valve shaft and the exposed portion of the hollow 4 of the valve body.

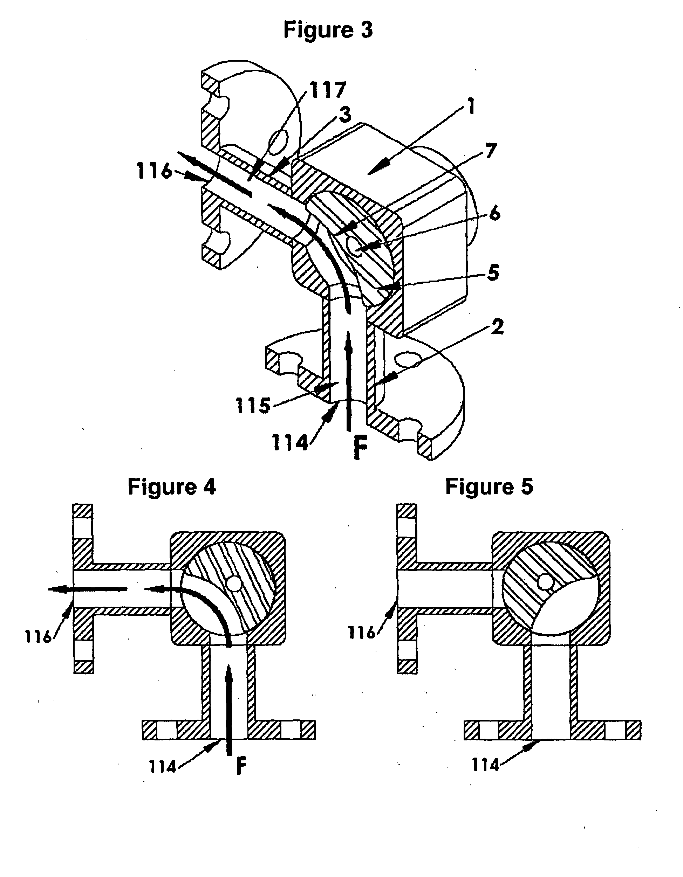

The relative position of the parts is more clearly seen in the cross section of Figure 3. In Figure 3, the flow path of fluid F is shown as a thick line. Also in Figure 3, the input is comprised of 3 parts, the input pipe 2, the input port 114 and the input passage 115. Similarly, the output is comprised of the output pipe 3, the output port 116 and the outlet passage 117. It may be desirable to maintain an equal cross sectional area in the port passages and at the inlet 114 and outlet 116. The requisite size of the conduit 7 is partially determined by the relative position of the input passage 115 and output passage 117. In the Figures, the angular displacement between the input port pipe 2 and the output port pipe 3 is usually shown as 90 degrees, but it will be apparent that the valve body may be constructed to have anywhere between 0 degrees and 360 degrees of fluid flow through the valve, with the conduit in the valve shaft cut to fit the size and position of the input port and output port.

As shown in Figure 4, the valve is opened when the conduit bridges both ports, i.e. brings the ports into fluid communication. The thick line shows fluid F flowing from the input port 114 to the output port 116. While there are many possible closed positions, Figure 5 shows the preferred position as pressure from the input biases the valve shaft against the output port to create a tighter seal.

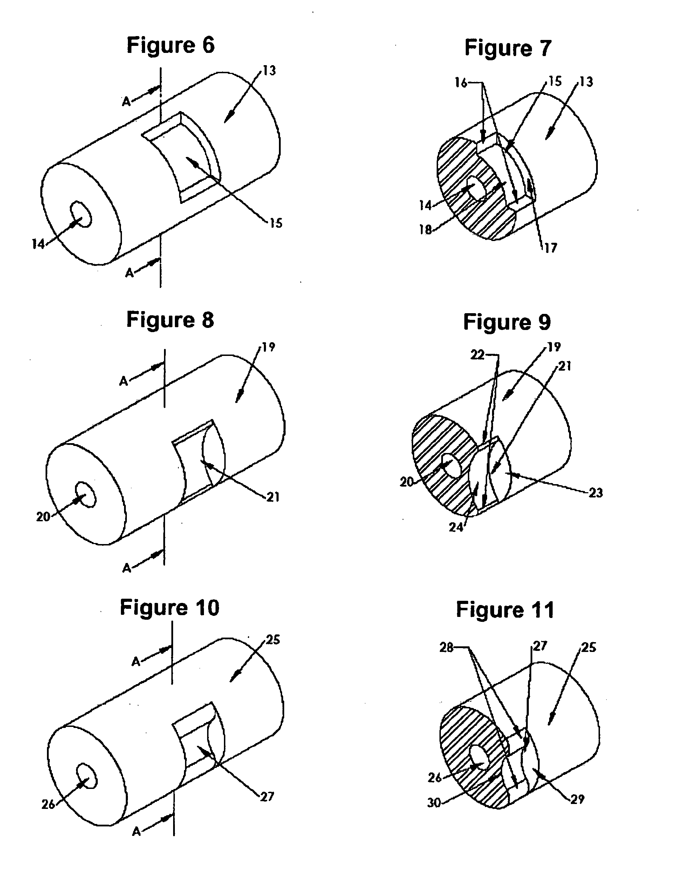

Figures 6 through 17 show various examples of conduits in a valve shaft, some with novel properties. In each case, the different conduit profiles can be appreciated.

Figures 6 and 7 show two views of the typical conduit shape of the prior art. However, valve shaft 13 is new, in that it is a cylindrical valve shaft equipped with a temperature control core 14. The conduit 15 is cut as an equal width and depth section into the valve shaft 13. Figure 7 shows that the end walls 16 and side walls 17 of the conduit 15 lie on radii of the cylindrical valve shaft 13. The end walls 12 are further defined by being perpendicular to the conduit face 18. The side walls 13 are further defined by being parallel. The conduit face 18 is at a constant distance from the longitudinal axis of the valve shaft.

Figures 8 and 9 show a valve shaft 19 with temperature control core 20 and conduit 21. The conduit 21 has a novel concave crescent shape. The side walls 23 of the conduit 21 are at a constant width. However, the conduit face 24 is a concave cut in the direction of fluid flow, and perpendicular to the side walls. The end walls 22 are smoothly connected to the conduit face 20, but are slightly convex towards the unmodified surface of the valve shaft 19. This combination of a slightly convex end wall 18 and smooth crescent conduit face 20 substantially minimize fluid shear both when the valve is in an open position and as the valve opens and closes. When in the closed position, the crescent shape of the conduit face 20 acts to pool the fluid being controlled so that the momentum of the fluid biases the valve shaft into a tighter seal against the cylindrical bore of the valve body. Once a tight seal is achieved, the pressure imbalance between the input and output maintains the seal.

Figures 10 and 11 show a valve shaft 25 with temperature control core 26 and conduit 27. The conduit 27 has a novel filleted crescent shape. As in valve shaft 19 of Figures 8 and 9, the side walls 29 of Figures 10 and 11 are parallel, and the conduit face 30 is a concave cut in the direction of fluid flow, and perpendicular to the side walls. However, the end walls 28, which are convex and are smooth to the conduit face 30, are much larger than the end walls 22 of Figures 8 and 9. The larger end walls 28 allow the valve to be configured to either control the flow of larger particulate matter or to function with larger particulate matter suspended in a fluid, or in instances where the fluid being controlled is highly sensitive to shear. By design, the end walls 28 have a large radiused bevel to prevent particulate matter from being jammed in between the valve body 1 and the valve shaft 25, and to further inhibit shear in a controlled fluid. The transition from fully open to shut off is not as abrupt as with certain other designs.

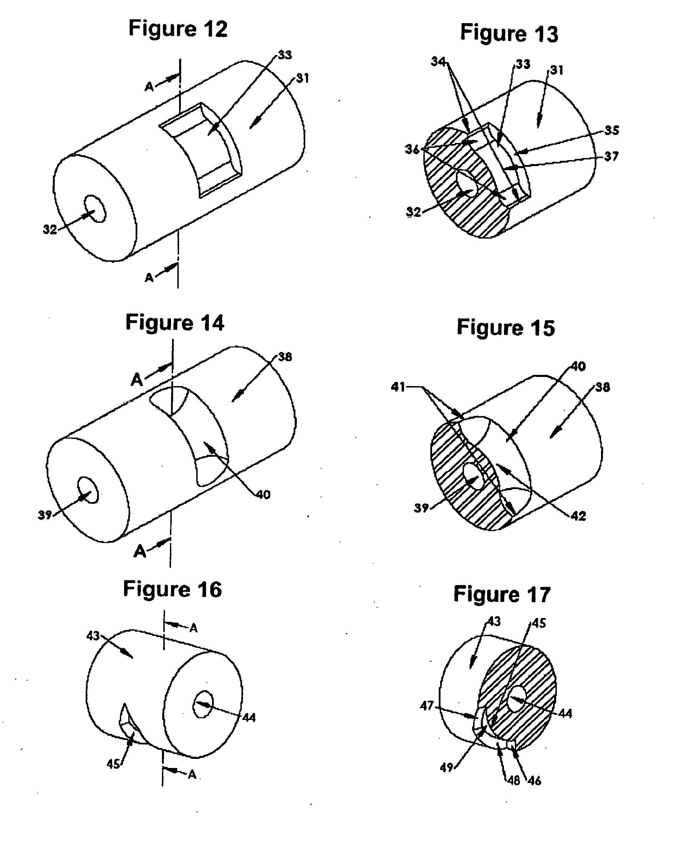

Figures 12 and 13 show a valve shaft 31 which is a modified version of valve shaft 19 of Figures 8 and 9. In certain applications, it may be desirable to keep the fluid being controlled at a fixed distance from the temperature control core 28 where possible, or it may be desirable to have as large a conduit as possible within the valve. In such cases, the surface of the conduit has a varied profile across the valve shaft. Preferably, the conduit 33 begins from either end with a bevelled or convex end wall 34 with a smooth transition to a concave outer conduit face portion 36 with another smooth transition to a middle conduit face portion 37. The middle conduit face portion 37 is typically at a uniform depth from the exterior of the valve shaft 31. The cross sectional area profile of the valve will be constant along the flow path at the middle conduit face portion 37. This cross sectional area profile can help to minimize pressure loss in the fluid being controlled.

Figures 14 and 15 disclose a fully rounded conduit 40 in a valve shaft 38, also for use as an on/off (stop) valve in the valve of Figure 1. In this embodiment, the conduit face 42 is cut with a semicircular cross section along an arcuate section of the shaft, so that the flow path is of constant cross sectional area through the valve to further vary the hydrodymanic effect of the fluid flow in the valve. Conduit 40 is shaped as a section of a torus and with end walls 41 shaped as near quarter-spherical sections of corresponding radius. When the input and output ports also have the same radius, the flow path through the valve has a nearly uniform minimum cross sectional area.

Figures 16 and 17 show a precision metering valve shaft 43 for use in another embodiment of the invention using the valve body of Figure 1. In this embodiment, there is an optional temperature control core 44. The conduit 45 has a novel shape to provide a useful flow control property. The input port biased side walls 48 are parallel but the output port biased conduit surfaces 46 are oriented to meet in a tapered section to form a point. As this tapered type valve shaft is rotated from the slightly open position to a more pronounced open position, the maximum cross sectional area for fluid communication is increased in proportion to the rotational displacement squared. This allows for more precise low flow control at the slightly open position. The conduit face 49 can be of any of the shapes previously discussed, provided that the minimum depth is sufficiently great so that the cross sectional area of the flow is limited by the intersection of output port biased conduit surfaces 46 and the output passage 117 and not some other narrowing in the conduit 45. With this objective in mind, an embodiment comprising this tapered conduit valve shaft 43 can be rotated to control flow with greater precision than rectangular conduits having the same maximum conduit cross sectional area. This new valve shaft allows a cylindrical rotary valve for use in instances where throttling of the flow must be precisely controlled.

It will be apparent to those of skill in the art that the novel features of the conduit shape may be combined for particular uses depending on the design parameters. In a flow control system, it will be possible to substitute the valve shaft in order to vary the flow characteristics of the flow control gate. The nature of the design allows the valve to be configured to join inputs and outputs of nearly any relative direction, or configured to be a nearly straight path when the valve is opened. The valve can be turned on and off quickly, and the valve can be accurately opened to a partial degree.

### Embodiment 2: Pulse Valve

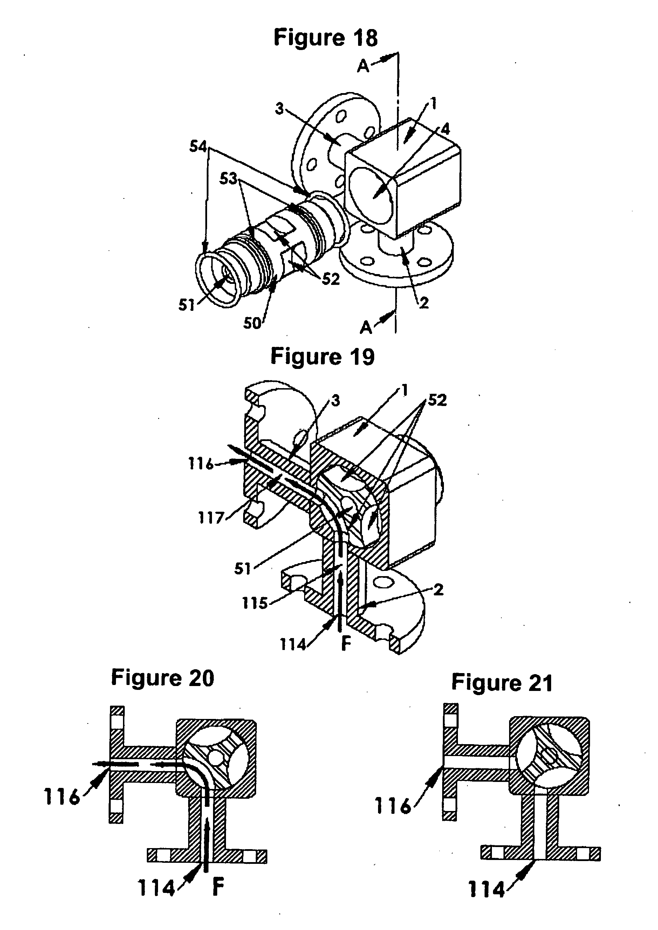

Figure 1 and Figures 18 through 27 disclose embodiments of the present invention configured to create a flow pulse in the fluid being controlled at the output of the valve body. The various embodiments demonstrate the design parameters that are available for use in the present invention. This embodiment includes a valve body 1 with input pipe 2, output pipe 3 as disclosed in Figure 1. The exploded view in Figure 18 shows the valve body 1 further provided with the hollow 4 in the valve body 1 sized to accept a standard radius cylindrical valve shaft 50. The cylindrical valve shaft may be equipped with a temperature control core 51. In this example, symmetrical crescent shaped conduits 52 are spaced evenly about the shaft. If required by the choice of material, seal channels 53 are cut around the valve shaft 50 on either side of the conduits 52 into which seals 54 are inserted. A self lubricating coating on the valve shaft 50 may also be provided.

The valve shaft 50 is inserted into the hollow 4 where the shaft is allowed to rotate. Any one of a variety of suitable drive means may be used to rotate the valve shaft at a pre-determined frequency. Figure 19 shows a cross section of the pulse type valve shaft 51 operating inside the valve housing 1. The thick line represents the predicted flow path of fluid F. Figure 20 shows the pulse type valve shaft 50 rotated to a fully open position where the minimum cross sectional area through the conduit is at a maximum; the predicted flow path of fluid F is also visible in this view. Figure 21 shows the pulse type valve shaft 50 rotated to a fully closed position where the minimum cross sectional area through the conduit is zero. There may be some leakage in the valve that causes this minimum cross sectional area to be greater than zero. An intentional gap based on tolerance criteria may also be added. This optional design feature is discussed in more detail below.

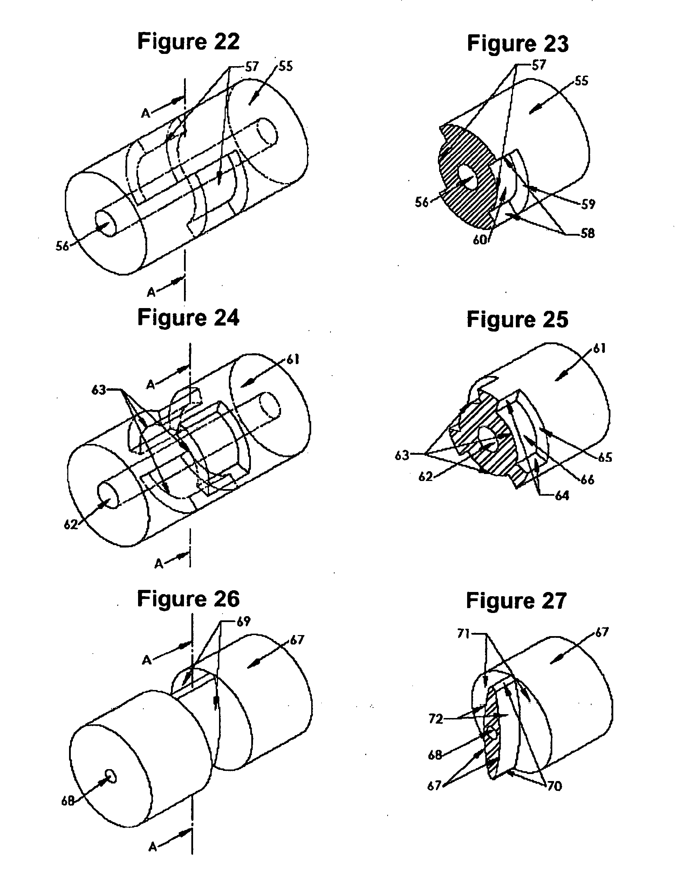

Figure 22 and Figure 23 disclose a two conduit pulse type valve shaft 55, with optional temperature control core 56 and conduits 57. The cross sectional view in Figure 24 better illustrates the shape of the conduits 57. Figures 24 and 25 disclose a three conduit pulse type valve shaft 61. Figures 26 and 27 disclose a different variant, in which a two conduit pulse type valve shaft 67 is configured as a blade. Each of these valve shafts provides a different flow profile when used in the same system.

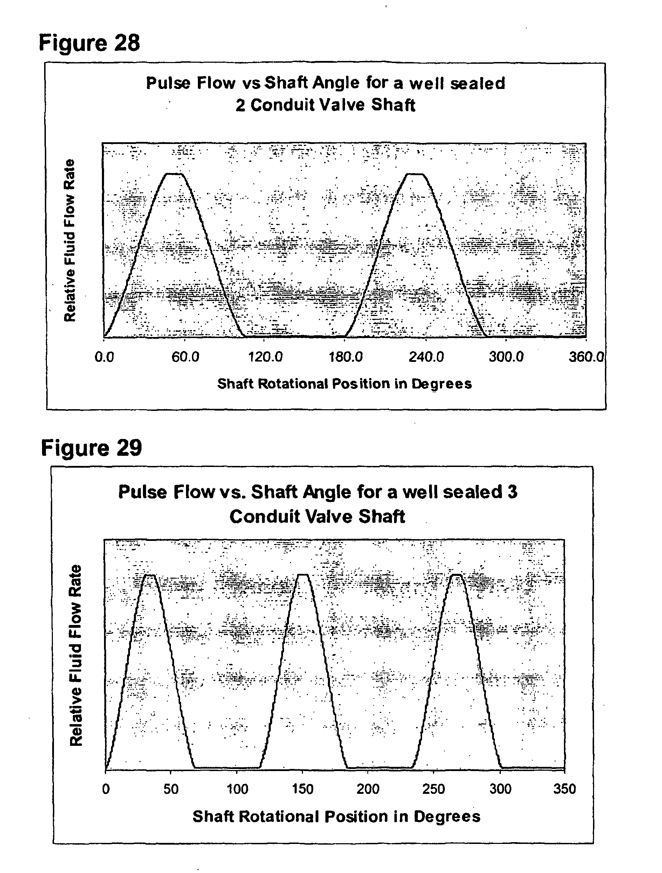

Figure 28 is a graph showing the predicted relative amount of fluid that can flow through a valve of the present invention comprising a two conduit pulse type valve shaft 55 of Figures 22 and 23. On the y-axis, the graph depicts the relative fluid flow rate which is proportional to the minimum cross sectional exposure of the conduit at a given rotational position; the x-axis denotes the 360 degree rotation of the shaft. As the valve shaft is rotated from 0 degrees, the rising curve indicates that the valve is in a state of increasing fluid flow due to the increasing size of the first opening of the valve being modeled. A state of maximum fluid flow is then reached near 60 degrees where the line plateaus, before the line falls indicating a state of decreasing fluid flow. Between about 110 degrees and 180 degrees, the valve is in a closed position and the state of minimum fluid flow is zero. The wave form in the diagram is repeated from degrees 180 to 360 since the valve shaft being modeled has two equal and symmetrically spaced conduits. In this model, the plateau at the state of maximum fluid flow occurs because the input and output port size limit the overall flow rate in the fully open position, but this is not always the case with other embodiments.

Similarly, Figure 29 shows the variant flow profile anticipated when the three conduit pulse type valve shaft of Figures 24 and 25 is installed in the valve of the present invention shown in Figure 1. Again, the y-axis denotes the relative fluid flow rate and the x-axis denotes the 360 degree rotational position of the shaft. As the valve shaft is rotated from 0 degrees, the rising curve indicates that the valve is in a state of increasing fluid flow. A state of maximum fluid flow is then reached near 30 degrees where the line plateaus, before the line falls indicating a state of decreasing fluid flow. Between about 60 degrees and 120 degrees, the valve is in a closed position and the state of minimum fluid flow is zero. The wave form is repeated twice since the valve shaft being modeled has three equal and symmetrically spaced conduits.

In general, the valve-shaft can contain multiple conduits or a single conduit. By varying the conduit shape and size, and the rotational speed of the valve shaft, a person skilled in the art can use the valve of the present invention to create a range of predictable pulses in the fluid being controlled. In combination with the other features herein, the valve can operate smoothly over a wide variety of dynamic heat conditions without substantially compromising pressure wave predictability.

### Embodiment 3: Wave Valve.

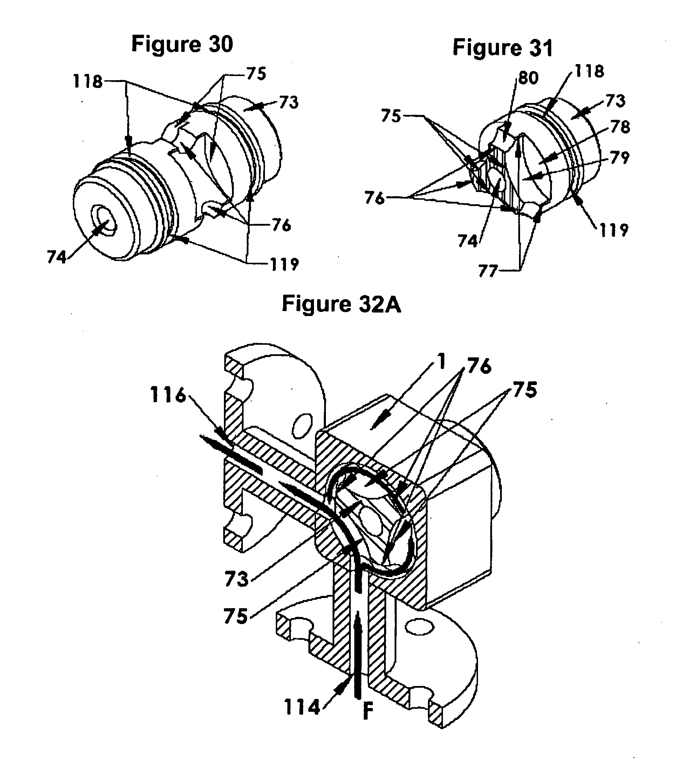

Yet another variation of the pulse valve is a "wave-valve" as shown in Figures 30, 31, 32A and 32B. In certain embodiments, it is desirable to create a known gap size in the clearance between the valve body (housing) and the valve shaft, in addition to the conduits previously described, so that fluid flow can be accurately controlled without entirely turning off fluid flow. This creates a "wave" or "offset pulse" in the fluid which is useful in certain applications. The prior art teaches away from intentionally inserting gaps into the space between the valve body and the valve shaft, to improve the seal and eliminate "leakage". In contrast, certain wave valve embodiments of the invention allow a user to predetermine, and thereby quantify, the "leak" to suit a design purpose.

The overall wave valve configuration is similar to the pulse valve. Figure 30 and Figure 31 show two views of a three conduit wave type valve shaft 73, with optional temperature control core 73, wide conduits 75 and narrow offset conduits 76. The shape of these conduits help determine the flow properties of the fluid F through the valve. Wide conduits 75 have conduit faces 79, side walls 78, and may have chamfered, bevelled or radiused end walls 77 to prevent excess shear. Between adjacent wide conduits, the valve shaft forms vanes 80. The thick arrows demonstrate the direction of flow of the fluid F being controlled. The narrow offset conduit 76 cuts through the vanes 80 to create a base pathway that is never closed in valve operation.

In Figure 32A, the valve shaft 73 is in a fully open position, but it is apparent that the predicted flow path of fluid F (shown as a thick arrows) exists clockwise through the wide conduit 75 and simultaneously in the counter clockwise direction through adjacent wide conduits 75 and narrow conduits 76. This is a state of maximum flow.

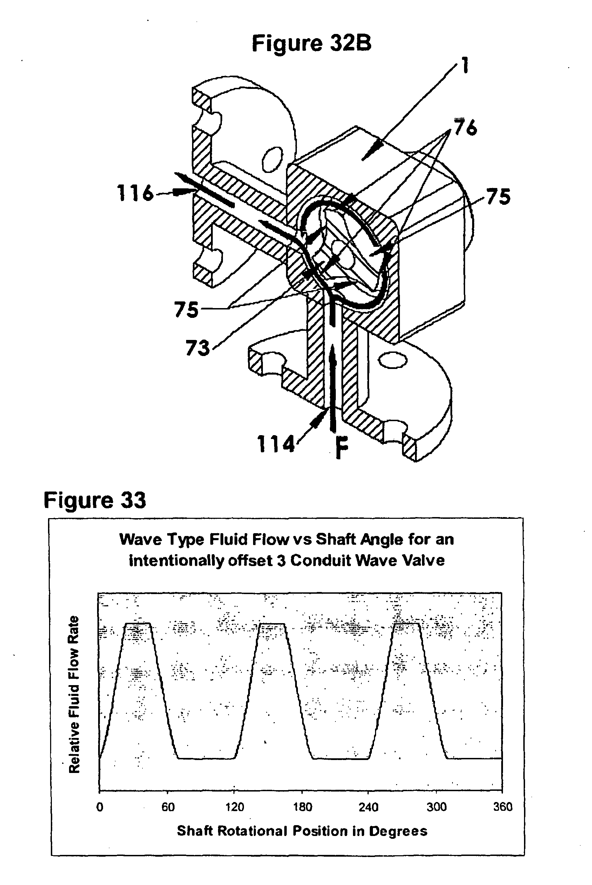

In Figure 32B, the valve shaft 73 is in a state of minimum flow. Even when the wide conduits do not bridge the input and output ports, the wave type valve shaft allows a predetermined amount of fluid to continually flow. The narrow conduits create an intentional minimum clearance or gap so that there is a continuous predetermined minimum fluid flow from the inlet 114 to the outlet 116 even when a vane 80 lies in the path between. The flow path of fluid F (shown as thick arrows) must pass through narrow conduits 76 in both the clockwise and counter clockwise directions

The graph in Figure 33 shows a model of the predicted flow profile for the particular embodiment of the wave valve where the valve shaft has 3 identical and symmetrically spaced wide conduits joined by identical narrow grooves of relatively small cross sectional area. As the shaft rotates through 360 degrees, the graph shows how the minimum cross sectional area along the hypothetical flow path will vary. For a fixed input pressure and fluid viscosity, the flow rate at the output varies proportionally with the minimum cross sectional area of the narrowest point along the flow path (shown in Figure 32A and Figure 32B by the thick arrow). In designing a system in the manner of this invention, a technician skilled in the art should begin with the particular flow profile that is desired, and chose a valve shaft with appropriately spaced conduits and appropriately sized narrow offset conduits. At 0 degrees, the valve is above the y-axis indicating that there is some fluid flow. As the valve shaft is rotated from 0 degrees, the rising curve indicates that the valve is in a state of increasing fluid flow. A state of maximum fluid flow is then reached from about 20 degrees until 45 degrees where the line plateaus. From about 45 degrees until 65 degrees, the line falls indicating a state of decreasing fluid flow corresponding to the narrowing of the cross sectional area in the conduits. Between about 65 degrees and 120 degrees, the valve is in a state of minimum fluid flow that is not zero. The first opening in this particular embodiment of the valve is never entirely closed. The wave form in the diagram is repeated from degrees 120 to 240 and from degrees 240 to 360 since the valve shaft being modeled has three identical and symmetrically spaced conduits

The valve shaft of Figures 30 and 31 may also be equipped with radial grooves 118 adapted to receive radial seals 119 to prevent flow leakage out of the valve in the longitudinal direction. Although only one embodiment of the narrow offset conduit 76 is shown in Figures 30-32, it is immediately apparent that any of the previously disclosed shapes (and other variations) can be used across the vane 80 to achieve different flow effects.

### Embodiment 4: Cylindrical Rotary Diverter Valve

Within the timed sequence of a fluid flow control system, it is sometimes desirable to control the flow of an input fluid between a choice of outputs. Each of the advances discussed above can also be applied to an embodiment configured as a diverter valve. Valve shafts can be interchangeable in either two port or three port valve bodies provided that the width of the first cylindrical bores within each valve body are the same and the input and outputs port continue to register with the conduit to provide fluid communication.

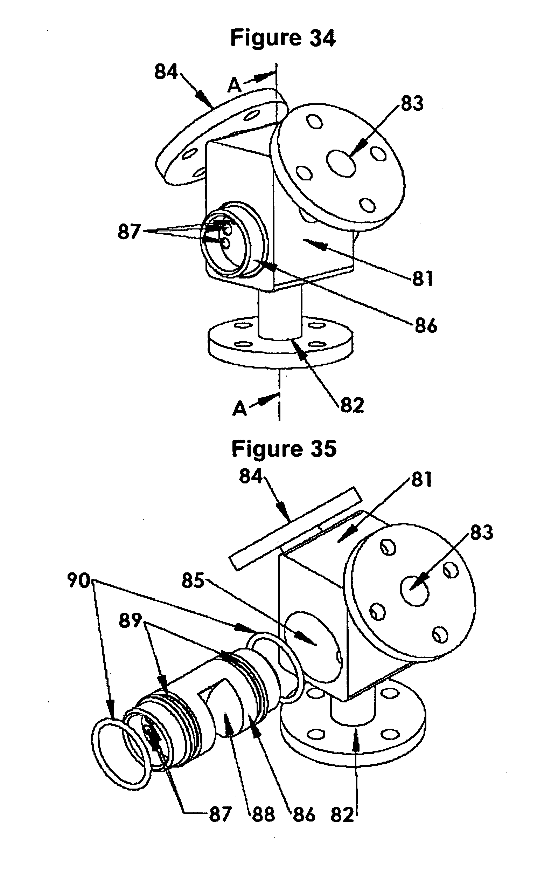

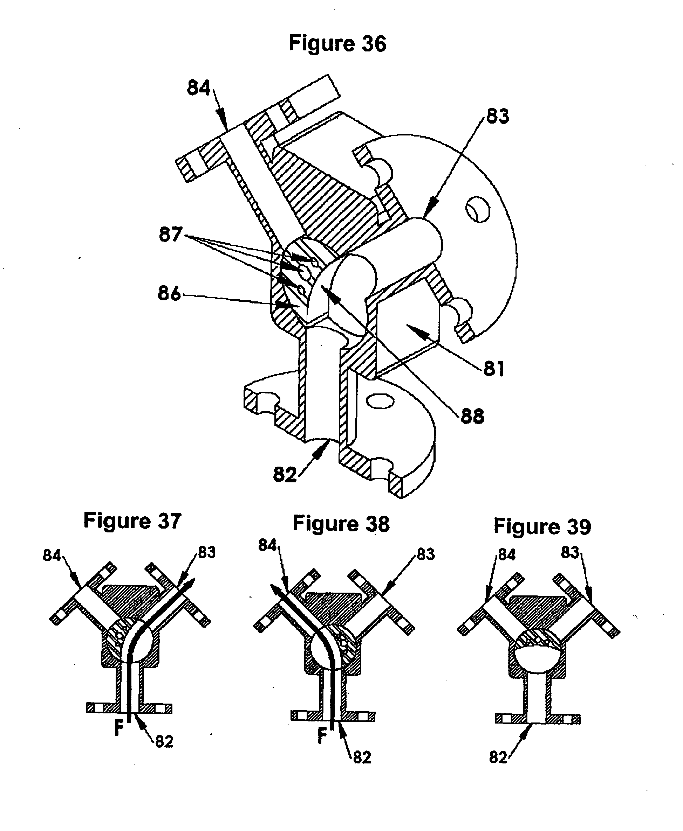

Figures 34 to 39 disclose a preferred embodiment of a diverter valve with a generic diverter type valve shaft. Figure 34 shows a three port valve body 81, with ports 82, 83 and 84. In a diverter application, the ports are understood to be input port 82, Outlet A 83 and Outlet B 84. The diverter type valve shaft 86 is slide fitted into the valve body 81. The diverter type valve shaft 86 has optional temperature control cores 87 running substantially parallel to the longitudinal axis of the valve shaft. This variation in the position of the temperature control cores is necessitated by the wide opening of the diverter valve conduit 88 (shown in Figure 35). As shown in the cross sectional view of Figure 36, the conduit 88 may be deep, and the one or more temperature control cores 87 may be offset from the longitudinal axis in the neighbourhood of the conduit to allow for this configuration. The temperature control cores may fork, or an oblong cross sectional shape may be used (not shown) to maximize the thermodynamic effect at the surface of the conduit.

Figures 37, 38 and 39 show the operating positions of the diverter valve. The valve shaft may be rotated so the input port 82 comes into fluid communication with first output port 83 but not second output port 84 as shown by the thick line representing predicted fluid flow path of fluid F in Figure 37. Or, the valve shaft may be rotated so the input port 82 comes into fluid communication with second output port 84 but not first output port 83 as shown by the thick fluid F flow line in Figure 38. In the closed position shown in Figure 39, neither output port 83 nor output port 84 is in fluid communication with input port 82 and the valve is closed. In the closed position, it is preferable to have the conduit 49 facing the input port 44 so that the pressure differential between the output region and the input region causes the valve shaft to press against the output ports and make a tighter seal.

It would be considered within the scope of this invention to have numerous output ports on either side of the input port so that output ports adjacent to the input port or an already opened output port may also be opened at any time, the restriction being that the input port and the opened output ports must be fluidly connected by the arc of the valve shaft carved out by the conduit (X degrees) and all ports must be closed by the arc of the valve shaft which is not occupied by the conduit (360 degrees minus X degrees). The conduit in the shaft is capable of bridging any input ports with any series of adjacent ports. Flow can be directed to any series of adjacent output ports by turning the shaft so that the conduit is aligned with the input port and the desired series of adjacent output ports. By using a valve train, more complex flow control can be achieved.

### Embodiment 5: Cylindrical Rotary Mixing Valve

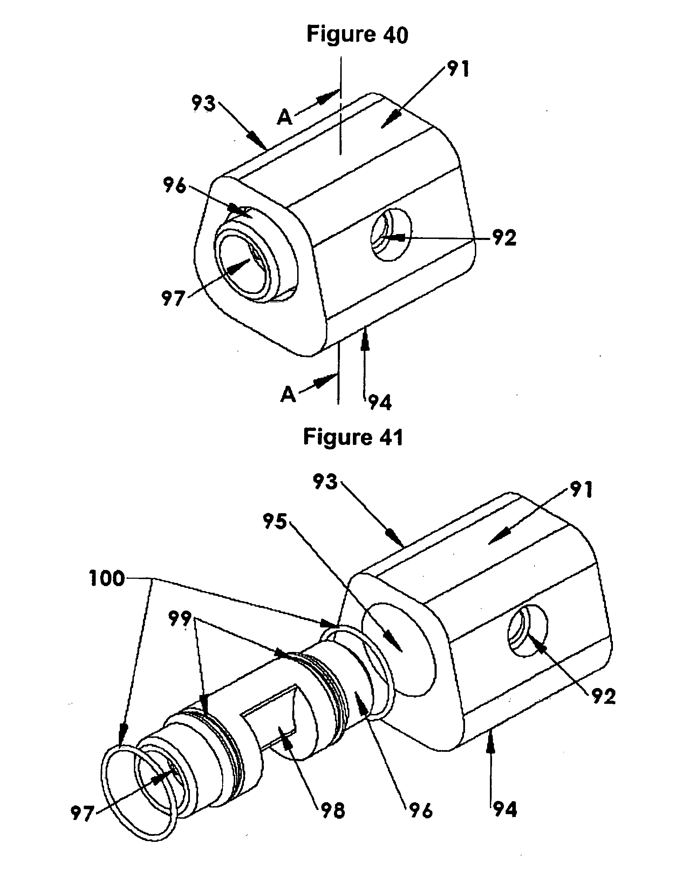

The mixing valve 91 of Figure 40 shows a simplified perspective view of a custom valve in which the input ports 92 (Inlet A) and 93 (Inlet B) have direction of flow coplanar to and displaced a certain number of degrees from the direction of flow of output port 94. The valve shaft 96 with optional temperature control cores 97 rotates within a housing defined by a cylindrical hollow 95 (shown in the expanded view of Figure 41) of the valve body 91. As the conduit 98 may need to be large to accommodate the range of unimpeded fluid flow from either input port 92 or 93, the temperature control cores 97 may need to be offset and branched or otherwise deformed in the neighbourhood of the conduit 98 to obtain the desired heat flow control. For simplicity of design in construction, the subject description discloses multiple temperature control cores connected at the end of the valve shaft as the most preferred embodiment. However, heat sensitive applications and uses may warrant a modified arrangement and shape of temperature control core to meet design criteria. The variants disclosed herein, and those variants which will be apparent to those skilled in the art are considered to be within the scope of this invention.

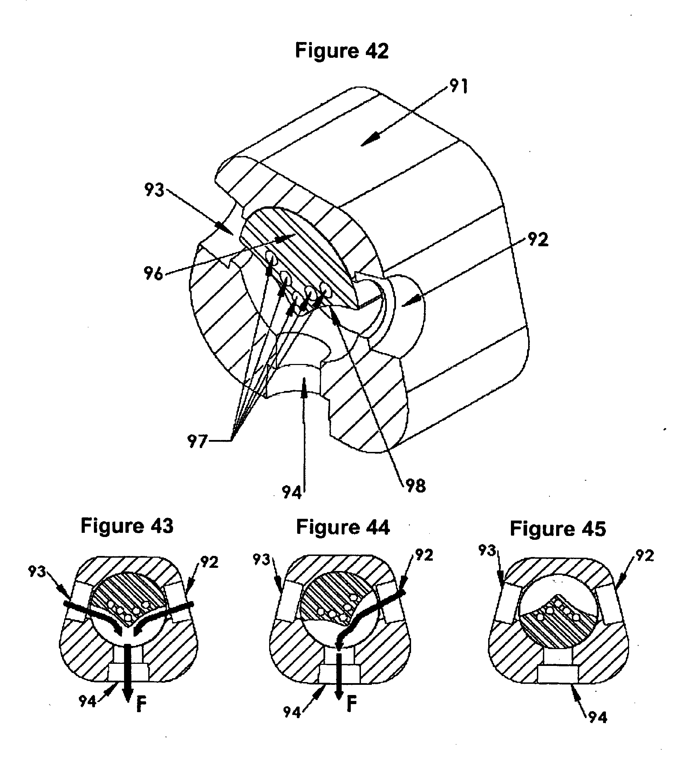

The conduit 98 is formed in the outer surface of the valve shaft and is designed to expose a relative proportion of Inlet A and Inlet B at any one time. In this way, the valve is able to receive flow from two input ports at once in a known percentage and mix them to a common output port. Figures 42 shows a projected view of a cross section of the assembled valve in which the valve shaft is rotated to expose half of input port 92 (Inlet A) and half of input port 93 (Inlet B). The pressure driving the fluid from each of input port 92 (Inlet A) and half of input port 93 (Inlet B) can be controlled so that it is equal, and so the valve of Figure 42 would evenly mix the two fluids. As the valve is rotated to one direction or the other, different mixing ratios anywhere between 0% to 100% can be achieved.

Figures 43 through 45 show the Even Mixing, 100% Bias Inlet A and closed positions, respectively. In this embodiment, assuming equal pressure at both input ports, Figure 43 shows even mixing as the valve shaft has been rotated so that the conduit 98 opens the same percentage of both input ports 92 and 93 to fluid communication with the output port 94. The valve shaft 96 can be rotated to a 100% bias position, which is effectively a diverter valve, as in Figure 44; or the mixing type 3 port valve of Figure 40 can be closed by rotating the valve shaft 96 so that no part of the conduit 98 is exposed to the output port 94. The rotational design makes efficient automated control of this valve easy to program. Between the 100% bias positions in either direction, there is a range of positions for mixing various proportions of fluid streams communicating via the first and second input ports, for fluid communication with the output port or which the even mixing of Figure 43 is but one example.

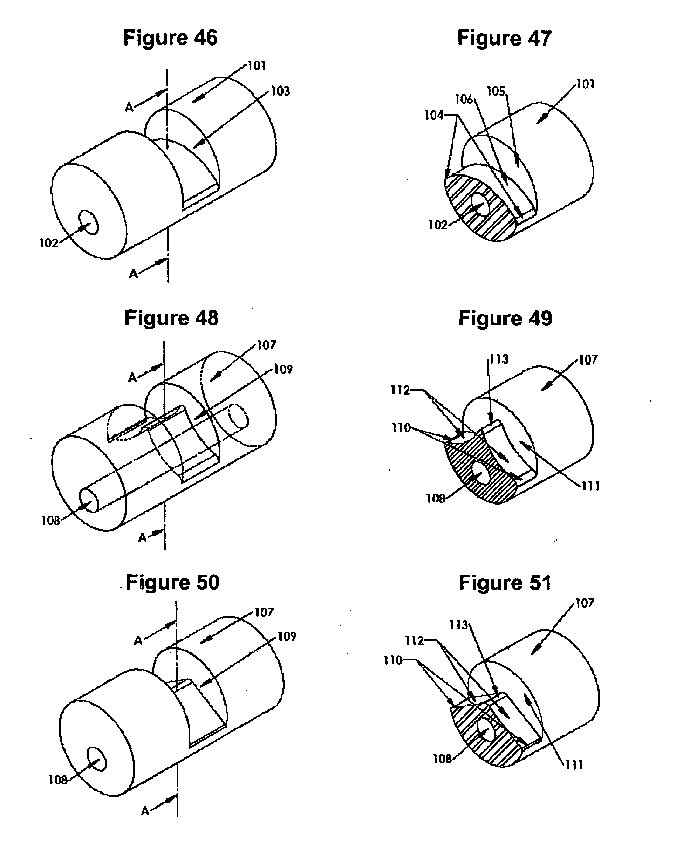

As with the various valve shafts for use in the on/off valve application, the conduit face of the mixing valve can also be shaped to achieve different design goals. Without limiting the generality of the invention, Figures 46 through 51 show three embodiments of valve shafts to demonstrate the versatility of design configuration.

Figures 46 and 47 show the profile of the mixing type valve shaft 101, with optional temperature control core 102 and conduit 103. The conduit face 106 is primarily convex to allow mixing primarily within the heat controlled region of the valve itself. For accuracy of ratios, the end walls 104 can be slightly concave to sharpen the angle of entry, or even more concave to reduce shear, depending on the application. The side walls 105 of the conduit 103 also determine the overall shape and cross sectional area (the main parameter in determining possible flow in the valve).

Figures 48 and 49 employ a differently contoured conduit 109 (similar to that of the shaft of Figures 40 to 45) in the valve shaft 107. There is only one temperature control core 108 shown. The total conduit shape is defined by the end walls 110, side walls 111, conduit faces 112, and centre surface 113. The side walls 111 are parallel and the same width as the input ports and output ports. The end walls 110 are designed to have a curvature appropriate for the fluid being controlled, joining smoothly with the conduit faces 112 at either input side. The conduit faces 112 are concave to direct the fluid flow towards the output port 94 of Figure 40. The conduit faces meet at the rounded point center surface 113. In certain circumstances, care will be taken in designing the valve so that the center surface 113 does not impinge on the flow by creating an unwanted minimum cross sectional area when the valve is biased one way or the other. This shape will inhibit pressure loss and mixing within the valve, and is preferred in some applications.

Figures 50 and 51 show a valve shaft similar to the valve shaft shown in Figures 48 and 49 in which the concavity of the conduit faces 112 is zero (i.e., the conduit faces are flat). This embodiment may be preferred for applications where two streams of particulate matter are joined in a single stream.

In each mixing valve example, the factors used in determining the rates of mixing include, at any one time, the minimum exposed cross sectional area between Inlet A and the output port, the pressure of the fluid entering at Inlet A, the minimum exposed cross sectional area between Inlet B and the output port, and the pressure of the fluid entering at that Inlet B. However, each side of the valve shaft conduit may be configured to match the flow properties of the corresponding input fluid on the applicable side to provide very accurate mixing.

The above embodiments combine to form a valve train by assembling valve bodies in longitudinal alignment, employing a single valve shaft which extends through all of the valve bodies. Thus, fluids in different streams can be acted upon in a timed relationship.

### Application for Use in Dry Ice Blasting

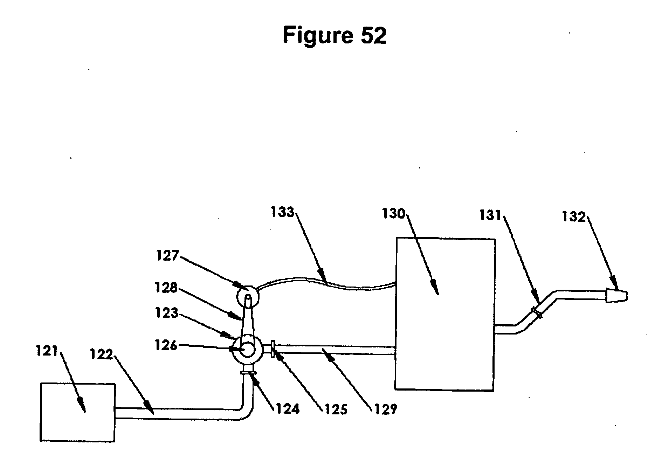

The valves previously described as a pulse valve embodiment and a wave valve embodiment are preferred for use in a dry ice blasting apparatus configured as shown in Figure 52. A compressor 121 feeds compressed air to a hose 122 attached to the input port 124 of the valve body 123. The pulse or wave type valve shaft 126 is connected by drive belt 128 to a motor 127, which rotates the valve shaft 126 at a selected or predetermined velocity. Any of the valve shafts shown in the preceding diagrams can be used, but the preferred embodiments are the pulse type valve shafts of Figures 22 to 25, since these create the smoothest waves with a short full stop. As the valve shaft 126 turns, the compressed air flows in cycles to the output port 125 which is either connected to another hose 129 or the dry ice feeder 130. The dry ice feeder adds dry ice to the air stream so that the mixed air stream and dry ice becomes the projectile exiting through the output hose 131 and the nozzle 132. An optional timing link 133 between the motor 127 and the dry ice feeder 130 controls the timing chain of the parts so that ice is provided to the air stream at a particular pressure phase. By varying the minimum cross sectional area of the path from compressor 121 to dry-ice feeder 130, the valve serves to create a cyclic pressure wave in the air steam at the dry ice feeder 130. When the valve shaft is in the closed position, air is built up in the hose 122 during the state of minimum fluid flow. Even though no air is flowing though the valve body during the state of minimum fluid flow in the valve, the air in the hose 129 and the dry ice feeder 130 continues to flow out the nozzle decreasing the mass of air in that section of the device. The reduced air mass affords an opportunity to more easily add ice to the flow path. As the valve shaft rotates through the range of open positions, the valve continues the cycle with a state of increasing fluid flow, a state of maximum fluid flow and a state of decreasing fluid flow, which allows the build up of forced air in hose 122 to flow. The added compression time during the state of minimum fluid flow allows the device to achieve the same air flow during the open phase with less work being done by the compressor 121. Consequently noise is reduced, and options for further dampening become available.

Although the valve 123 is shown being driven by an external motor 127, either the motor or the valve may be mounted internally in the dry ice feeder unit 130.

As compared to existing ice blasting devices which do not use any valves to control the air stream, this embodiment reduces the total amount of air consumed during the machine's operation and the amount of ice wasted without reducing the machine's effectiveness. The machine's effectiveness, or equivalent blasting effect, is measured by using an ice blaster without the valve installed to clean a given surface area in a given period of time and then operating the device of Figure 52 using the same ice blaster to clean the same size surface area in the same period of time.

The effects of using the valve in an ice blaster were tested using a commercially available ice blaster called the MIGHTY DR-I-CER™ available from GTC Sales and Leasing Inc. The MIGHTY DR-I-CER™ was tested without the valve, and was then equipped with a pulse valve in the manner shown in Figure 52 and tested again. The tests showed that when the ice blaster was equipped with the pulse valve and operated at an equivalent blasting effect: (i) the noise generation was reduced from over 125 dB to 104 dB; (ii) the air consumption in the machine decreased by 40%; and (iii) the dry ice consumption by the machine decreased by 30%. In further tests, the noise of the rotary valve was further reduced using sound dampeners tuned to the valves frequency; this further reduced the noise generation of the device to below 90 dB at an equivalent blasting effect.

It will be appreciated that the above description relates to the preferred embodiments by way of example only. Many variations in the apparatus and methods of the invention will be clear to those knowledgeable in the field, and such variations are within the scope of the invention as described and claimed, whether or not expressly described.

## Claims

1. A cylindrical rotary valve comprising
(a) a valve body (1) defining at least one input port (114) and at least one output port (116), each port providing a separate fluid communication path between an outer surface of the valve body (1) and a first cylindrical bore (4) extending along a longitudinal axis defined by the valve body (1),
(b) a cylindrical valve shaft (5) coaxially positioned within the first cylindrical bore (4),
(c) a first fluid conduit (7) extending along an outer surface of the valve shaft (5),
(d) the valve shaft (5) rotating between a closed position and an open position, such that when the valve shaft (5) is in the open position, the first fluid conduit connects the at least one input port (114) and the at least one output port (116) for fluid communication,
**characterised in that**
(e) the valve shaft (5) defines at least one temperature control bore (6) extending along the longitudinal axis, the at least one temperature control bore (6) defining at least one longitudinal fluid conduit extending between opposing ends of the valve shaft (5).

2. A rotary valve according to claim 1, wherein the at least one temperature control bore (6) defines a flow path for a thermally conductive fluid.

3. A rotary valve according to claim 1, wherein the conduit (7) defines a smoothly contoured topography.

4. A rotary valve according to claim 3, wherein the topography is defined by a first convex endwall connecting smoothly with a concave conduit face (12), said conduit face (12) connecting smoothly to a second convex endwall.

5. A rotary valve according to claim 4, wherein the first convex endwall and the second convex endwall are contoured to inhibit shear in a controlled fluid.

6. A rotary valve according to claim 4, wherein the conduit face (12) defines a cross sectional area profile with the first cylindrical bore (4) chosen to minimize pressure loss of the controlled fluid within the valve,

7. A rotary valve according to claim 4, wherein the first convex endwall, the concave conduit face (12) and the second convex endwall are each bounded longitudinally by a pair of parallel side walls (11).

8. A rotary valve according to of claim 4, wherein the concave conduit face (12) is radiused.

9. A rotary valve according to claim 1, wherein the conduit (7) defines a topography comprising:
a tapered section which registers with the at least one output port (116) when the valve shaft (5) is in the open position, and
a minimum cross sectional area in the conduit (7) is defined by an opening between the tapered section and the output port (116) during rotation of the valve shaft (5) through the open position, and said minimum cross sectional area varies in a predetermined non-linear relationship to an amount of valve shaft rotation through the open position.

10. A rotary valve according to claim 1, wherein the rotary valve defines a stop valve, and the valve body (1) has exactly one input port (114) and exactly one output port (116).

11. A rotary valve according to claim 1, the rotary valve defining a diverter valve; the valve body (1) having exactly one input port and two output ports; and the fluid conduit being contoured such that the valve shaft (5) is rotatable between: (i) a first open position providing fluid communication between the input port and a first output port of the two output ports, (ii) a second open position providing fluid communication between the input port and a second output port of the two output ports, and (iii) a closed position restricting fluid communication between the input port and both of the two output ports.

12. A rotary valve according to claim 1, the rotary valve defining a mixing valve (91);
the valve body (1) having exactly two input ports and one output port; and the fluid conduit being contoured such that the valve shaft (5) is rotatable between: (i) a closed position restricting fluid communication between the output port and both of the two input ports, (ii) a range of positions for mixing various proportions of fluid streams communicating via the first and second input ports for fluid communication with the output port, and (iii) a first fully biased position for fluid communication between the output port and the first input port, and a second fully biased position for fluid communication between the output port and the second input port.

13. A rotary valve according to claim 1, wherein the valve shaft (5) is coated with a self lubricating material.

14. A rotary valve according to claim 1, wherein the valve shaft (5) is slide-fitted into the valve body (1).

15. A rotary valve according to claim 1, wherein the valve shaft (5) and the first cylindrical bore (4) together define a set of opposing seal grooves (8) adjacent opposing sides of the first fluid conduit, and the set of opposing seal grooves (8) house self lubricating seals (9).

16. A cylindrical rotary valve according to claim 1, wherein
(a) the valve shaft (5) is operable to generate a predetermined fluid wave frequency, and
(b) one or more first fluid conduits (7) are defined by an outer surface of the valve shaft (5) and an inner surface of the first cylinder bore (4); the one or more first fluid conduits (7) extend transversely about the longitudinal axis,
the one or more first fluid conduits (7) each defining a first opening for fluid communication between the at least one input port (114) and the at least one output port (116), the size of the first opening varying during rotation of the valve shaft (5), such that as the valve shaft (5) rotates the one or more first fluid conduits (7) sequentially bring the at least one input port (114) and the at least one output port (116) through a fluid communication cycle consisting of: (i) a state of an increasing fluid flow; (ii) a state of maximum fluid flow; (iii) a state of decreasing fluid flow, and (iv) a state of minimum fluid flow.

17. A rotary valve according to claim 16, wherein the valve shaft (5) is coated with a self lubricating material.

18. A rotary valve according to claim 16, wherein the valve shaft (5) is slide-fitted into the valve body (1).

19. A rotary valve according to claim 16, wherein the valve shaft (5) and the first cylindrical bore (4) together define a set of opposing seal grooves (8) adjacent opposing sides of the first fluid conduit, and the set of opposing seal grooves (8) house self lubricating seals (9).

20. A rotary valve according to claim 16, wherein the valve shaft (5) defines at least one temperature control bore (6) extending along the longitudinal axis and extends between opposing ends of the valve shaft (5).

21. A cylindrical rotary valve according to claim 16, wherein the outer surface of the valve shaft (5) and the inner surface of the first cylinder bore (4) together define a plurality of first fluid conduits equidistantly spaced about the valve shaft (5).

22. A cylindrical rotary valve according to claim 21, wherein the plurality of first fluid conduits are of like size and configuration.

23. A cylindrical rotary valve according to claim 16, wherein the state of minimum fluid flow is zero.

24. An apparatus comprising:
a compressed air source (121) for supplying a compressed air stream to a particulate feeder (130) for mixing the compressed air stream and abrasive particulate matter;
a nozzle (132) for expelling a mixture comprising the compressed air and the abrasive particulate matter; and
a rotary valve as claimed in any one of claims 16 to 23, positioned in fluid communication with the compressed air source (121) and the particulate feeder (130), to control the flow of compressed air relative to the rotation of the valve shaft (5).

25. An apparatus according to claim 24, wherein the rotary valve is positioned between the compressed air source (121) and the particulate feeder (130).

26. An apparatus according to claim 25 for use with the particulate matter comprising dry ice pellets.

27. A modular cylindrical rotary valve system comprising:
(a) a rotary valve according to any one of claims 1 to 26,
(b) a replaceable first cylindrical valve shaft for coaxial positioning within the first cylindrical bore, and
(c) an outer surface of the first cylindrical valve shaft defining a first conduit profile when the first cylindrical valve shaft is positioned within the first cylindrical bore, the first cylindrical valve shaft being replaceable by a second cylindrical valve shaft defining a second conduit profile when the second cylindrical valve shaft is positioned within the first cylinder bore, and the first conduit profile being distinguishable from the second conduit profile.

28. A modular cylindrical rotary valve system according to claim 27, wherein the first conduit profile is defined by a first convex endwall connecting smoothly with a concave conduit face (12), said concave conduit face (12) connecting smoothly to a second convex endwall, the first convex endwall and second convex endwall are contoured to control shear in a controlled fluid, and the concave conduit face defines a cross sectional area profile with the first cylindrical bore (4) chosen to minimize pressure loss of the controlled fluid within the valve.

29. A modular cylindrical rotary valve system according to claim 28, wherein the first convex endwall, the concave conduit face (12) and the second convex endwall are each bounded longitudinally by a pair of parallel side walls (11).

30. A modular cylindrical rotary valve system according to claim 28, wherein the concave conduit face (12) is radiused.

31. A modular cylindrical rotary valve system according to claim 27, wherein the first conduit profile comprises:
(a) a tapered section which registers with the at least one output port (116) when the valve shaft (5) is in the open position,
(b) an output cross sectional area defined by the tapered section and the output port (116), for fluid communication between the output port (116) and the input port (114), during rotation of the valve shaft (5) through the open position; and
(c) the output cross sectional area defines a minimum cross sectional area of the first conduit profile; and
(d) the minimum cross sectional area varies in a predetermined non-linear relationship to an amount of valve shaft rotation through the open position.

32. A modular cylindrical rotary valve system according to claim 27, wherein the first valve shaft (5) defines at least one temperature control bore (6) extending along the longitudinal axis, and the at least one temperature control bore (6) defines at least one longitudinal fluid conduit extending between opposing ends of the valve shaft (5).

33. A cylindrical rotary valve according to claim 1, wherein
the valve shaft (5) is capable of rotating at least 360 degrees within a range of open positions such that the first fluid conduit connects the at least one input port (114) and the at least one output port (116) for fluid communication; said range comprising: a partially open position wherein the at least one output port (116) is partially exposed to the conduit (7), a fully open position wherein the at least one input port (114) and the at least one output port (116) are fully exposed to the conduit (7), and a partially closed position wherein the at least one input port (114) is partially exposed to the conduit (7); and the first fluid conduit (7) defines a topography comprising a first convex endwall connecting the outer surface with a concave conduit face (12), the concave conduit face (12) connecting smoothly to a second convex endwall, the first convex endwall and the second convex endwall are contoured to control shear in a controlled fluid, and the concave conduit face (12) defines a cross sectional area profile with the first cylindrical bore (4) chosen to minimize pressure loss of the controlled fluid within the valve.

34. A rotary valve according to claim 33, wherein the first convex endwall, the concave conduit face (12) and the second convex endwall are each being bounded longitudinally by a pair of parallel side walls (11).

35. A rotary valve according to claim 33, wherein the topography further comprises a tapered section which registers with the at least one output port (116) when the valve shaft (5) is in the open position, and a minimum cross sectional exposure in the conduit is defined by an opening between the tapered section and the output port (116) during rotation of the valve shaft (5) through the open position, and said minimum cross sectional area varies in a predetermined non-linear relationship to an amount of valve shaft rotation through the open position.

36. A rotary valve according to claim 33, wherein the valve shaft (5) is coated with a self lubricating material.

37. A rotary valve according to claim 33, wherein the valve shaft (5) is slide-fitted into the valve body (1).

38. A rotary valve according to claim 33, wherein the valve shaft (5) and the first cylindrical bore (4) together define a set of opposing seal grooves (8) adjacent opposing sides of the first fluid conduit, and the set of opposing seal grooves (8) house self lubricating seals (9).

39. A cylindrical rotary valve according to claim 1, wherein
the first fluid conduit is contoured such that the valve shaft (5) rotates between: (i) a first open position providing fluid communication between the input port and the first output port, (ii) a second open position providing fluid communication between the input port and the second output port, and (iii) a closed position restricting fluid communication between the input port and both of the two output ports.

40. A rotary valve according to claim 39, wherein the valve shaft (5) is coated with a self lubricating material.

41. A rotary valve according to claim 39, wherein the valve shaft (5) is slide-fitted into the valve body (1).

42. A rotary valve according to claim 39, wherein the valve shaft (5) and the first cylindrical bore (4) together define a set of opposing seal grooves (8) adjacent opposing sides of the first fluid conduit, and the set of opposing seal grooves (8) house self lubricating seals (9).

43. A cylindrical rotary valve according to claim 1, wherein
the first fluid conduit is contoured such that the valve shaft (5) rotates between: (i) a closed position for restricting fluid communication between the output port and both of the two input ports, (ii) a range of positions for mixing various proportions of fluid streams communicating via the first and second input ports, for fluid communication with the output port, and (iii) a first fully biased position for fluid communication between the output port and the first input port, and a second fully biased position for fluid communication between the output port and the second input port.

44. A rotary valve according to claim 43, wherein the valve shaft (5) is coated with a self lubricating material.

45. A rotary valve according to claim 43, wherein the valve shaft (5) is slide-fitted into the valve body (1).

46. A rotary valve according to claim 43, wherein the valve shaft (5) and the first cylindrical bore (4) together define a set of opposing seal grooves (8) adjacent opposing sides of the first fluid conduit, and the set of opposing seal grooves (8) house self lubricating seals (9).

47. A rotary valve according to claims 1 to 46, wherein the rotary valve comprises a plurality of first fluid conduits positioned longitudinally along the valve shaft (5), and each first fluid conduit corresponds to a set of at least one input port (114) and at least one corresponding output port (116).

## Patentansprüche

1. Ein zylindrisches Drehventil bestehend aus
(a) einem Ventilgehäuse (1), das mindestens einen Eingangskanal (114) und mindestens einen Ausgangskanal (116) definiert, wobei jeder Kanal einen separaten Flüssigkeitsübertragungsweg zwischen einer Außenfläche des Ventilgehäuses (1) und einem ersten zylindrischen Bohrloch (4) bietet, das sich entlang einer Längsachse erstreckt, die durch das Ventilgehäuse (1) definiert wird,
(b) einer zylindrischen Ventilwelle (5), die koaxial innerhalb des ersten zylindrischen Bohrlochs (4) positioniert ist,
(c) einem ersten Flüssigkeitskanal (7), der sich entlang einer Außenfläche der Ventilwelle (5) erstreckt,
(d) der Ventilwelle (5), die zwischen einer geschlossen Position und einer offenen Position rotiert, so dass, wenn sich die Ventilwelle (5) in der offenen Position befindet, der erste Flüssigkeitskanal den Eingangskanal (114), wovon mindestens einer vorhanden sein muss, und den Ausgangskanal (116), wovon mindestens einer vorhanden sein muss, für die Flüssigkeitsübertragung verbindet,
**dadurch gekennzeichnet, dass**
(e) die Ventilwelle (5) mindestens ein Temperaturregelloch (6) definiert, welches sich entlang der Längsachse erstreckt, wobei das Temperaturregelloch (6), wovon mindestens eins vorhanden sein muss, mindestens einen längslaufenden Flüssigkeitskanal definiert, der sich zwischen den gegenüberliegenden Enden der Ventilwelle (5) erstreckt.

2. Ein Drehventil in Übereinstimmung mit Anspruch 1, wobei das Temperaturregelloch (6), wovon mindestens eins vorhanden sein muss, einen Durchflussweg für eine wärmeleitende Flüssigkeit definiert.

3. Ein Drehventil in Übereinstimmung mit Anspruch 1, wobei der Kanal (7) eine nahtlos umrissene Topographie definiert.

4. Ein Drehventil in Übereinstimmung mit Anspruch 3, wobei die Topographie durch eine erste konvexe Endwand definiert wird, die sich nahtlos mit einer konkaven Kanalseitenfläche (12) verbindet, wobei die genannte Kanalseitenfläche (12) sich nahtlos mit einer zweiten konvexen Endwand verbindet.

5. Ein Drehventil in Übereinstimmung mit Anspruch 4, wobei die erste konvexe Endwand und die zweite konvexe Endwand so umrissen sind, dass sie ein Abscheren in einer kontrollierten Flüssigkeit unterbinden.

6. Ein Drehventil in Übereinstimmung mit Anspruch 4, wobei die Kanalseitenfläche (12) ein Querschnittsprofil mit dem ersten zylindrischen Loch (4) definiert, das ausgewählt wurde, um Druckverlust der kontrollierten Flüssigkeit innerhalb des Ventils zu minimieren.

7. Ein Drehventil in Übereinstimmung mit Anspruch 4, wobei die erste konvexe Endwand, die konkave Kanalseitenfläche (12) und die zweite konvexe Endwand jeweils längs durch ein Paar paralleler Seitenwände (11) begrenzt werden.

8. Ein Drehventil in Übereinstimmung mit Anspruch 4, wobei die konkave Kanalseitenfläche (12) gerundet ist.

9. Ein Drehventil in Übereinstimmung mit Anspruch 1, wobei der Kanal (7) eine Topographie definiert, die aus Folgendem besteht:
ein keilförmiger Abschnitt, der mit dem Ausgangskanal (116), wovon mindestens einer vorhanden sein muss, registriert, wenn die Ventilwelle (5) sich in der offenen Position befindet, und
ein Mindestquerschnittsbereich in dem Kanal (7) wird durch eine Öffnung zwischen dem keilförmigen Abschnitt und dem Ausgangskanal (116) während der Drehung der Ventilwelle (5) durch die offene Position definiert, und der genannte Mindestquerschnittsbereich variiert in einem vorbestimmten, nicht linearen Verhältnis zu einem Betrag der Ventilwellendrehung durch die offene Position.

10. Ein Drehventil in Übereinstimmung mit Anspruch 1, wobei das Drehventil ein Absperrventil definiert und das Ventilgehäuse (1) genau einen Eingangskanal (114) und genau einen Ausgangskanal (116) besitzt.

11. Ein Drehventil in Übereinstimmung mit Anspruch 1, wobei das Drehventil ein Umluftventil definiert; das Ventilgehäuse (1) hat dabei genau einen Eingangskanal und zwei Ausgangskanäle; und der Flüssigkeitskanal wird derart umrissen, dass die Ventilwelle (5) drehbar ist zwischen: (i) einer ersten offenen Position, die die Flüssigkeitsübertragung zwischen dem Eingangskanal und einem ersten Ausgangskanal der beiden Ausgangskanäle bereitstellt, (ii) einer zweiten offenen Position, die die Flüssigkeitsübertragung zwischen dem Eingangskanal und einem zweiten Ausgangskanal der beiden Ausgangskanäle bereitstellt; und (iii) einer geschlossenen Position, die die Flüssigkeitsübertragung zwischen dem Eingangskanal und beiden Ausgangskanälen begrenzt.

12. Ein Drehventil in Übereinstimmung mit Anspruch 1, wobei das Drehventil ein Mischventil (91) definiert;
das Ventilgehäuse (1) besitzt dabei genau zwei Eingangskanäle und einen Ausgangskanal; und der Flüssigkeitskanal wird derart umrissen, dass die Ventilwelle (5) drehbar ist zwischen:
(i) einer geschlossenen Position, die die Flüssigkeitsübertragung zwischen dem Ausgangskanal und beiden Eingangskanälen begrenzt, (ii) einer Reihe von Positionen für das Mischen verschiedener Verhältnisse der Flüssigkeitsströme, welche über den ersten und zweiten Eingangskanal für die Flüssigkeitsübertragung mit dem Ausgangskanal übertragen werden, und (iii) einer ersten, vollständig einseitigen Position für die Flüssigkeitsübertragung zwischen dem Ausgangskanal und dem ersten Eingangskanal, und einer zweiten, vollständig einseitigen Position für die Flüssigkeitsübertragung zwischen dem Ausgangskanal und dem zweiten Eingangskanal.

13. Ein Drehventil in Übereinstimmung mit Anspruch 1, wobei die Ventilwelle (5) mit einem selbstschmierenden Material beschichtet ist.

14. Ein Drehventil in Übereinstimmung mit Anspruch 1, wobei die Ventilwelle (5) mit Gleitsitz in das Ventilgehäuse (1) eingepasst ist.

15. Ein Drehventil in Übereinstimmung mit Anspruch 1, wobei die Ventilwelle (5) und das erste zylindrische Loch (4) zusammen eine Reihe von gegenüberliegenden Dichtnuten (8) definieren, die an die gegenüberliegenden Seiten des ersten Flüssigkeitskanals angrenzen, und die Reihe von gegenüberliegenden Dichtnuten (8) nimmt selbstschmierende Dichtungen (9) auf.

16. Ein zylindrisches Drehventil in Übereinstimmung mit Anspruch 1, wobei
(a) die Ventilwelle (5) bedient werden kann, um eine vorbestimmte Flüssigkeitswellenfrequenz zu erzeugen, und
(b) ein oder mehrere erste Flüssigkeitskanäle (7) durch eine Außenfläche der Ventilwelle (5) und eine Innenfläche des ersten Zylinderlochs (4) definiert werden; der eine erste Flüssigkeitskanal oder die mehreren ersten Flüssigkeitskanäle (7) dehnt/dehnen sich quer über der Längsachse aus,
der eine erste Flüssigkeitskanal oder die mehreren ersten Flüssigkeitskanäle (7) definieren jeweils eine erste Öffnung für die Flüssigkeitsübertragung zwischen dem Eingangskanal (114), wovon mindestens einer vorhanden sein muss, und dem Ausgangskanal (116), wovon mindestens einer vorhanden sein muss, wobei die Größe der ersten Öffnung während der Drehung der Ventilwelle (5) variiert, so dass, wenn sich die Ventilwelle (5) dreht, ein oder mehrere erste Flüssigkeitskanäle (7) nacheinander den Eingangskanal (114), wovon mindestens einer vorhanden sein muss, und den Ausgangskanal (116), wovon mindestens einer vorhanden sein muss, durch einen Flüssigkeitsübertragungszyklus bringen, der aus Folgendem besteht: (i) ein Zustand eines steigenden Flüssigkeitsflusses; (ii) ein Zustand eines maximalen Flüssigkeitsflusses; (iii) ein Zustand eines abnehmenden Flüssigkeitsflusses, und (iv) ein Zustand eines minimalen Flüssigkeitsflusses.

17. Ein Drehventil in Übereinstimmung mit Anspruch 16, wobei die Ventilwelle (5) mit einem selbstschmierenden Material beschichtet ist.

18. Ein Drehventil in Übereinstimmung mit Anspruch 16, wobei die Ventilwelle (5) mit Gleitsitz in das Ventilgehäuse (1) eingepasst ist.

19. Ein Drehventil in Übereinstimmung mit Anspruch 16, wobei die Ventilwelle (5) und das erste zylindrische Loch (4) zusammen eine Reihe von gegenüberliegenden Dichtnuten (8) definieren, die an die gegenüberliegenden Seiten des ersten Flüssigkeitskanals angrenzen, und die Reihe von gegenüberliegenden Dichtnuten (8) nimmt selbstschmierende Dichtungen (9) auf.

20. Ein Drehventil in Übereinstimmung mit Anspruch 16, wobei die Ventilwelle (5) mindestens ein Temperaturregelloch (6) definiert, das sich entlang der Längsachse und zwischen den gegenüberliegenden Enden der Ventilwelle (5) erstreckt.

21. Ein zylindrisches Drehventil in Übereinstimmung mit Anspruch 16, wobei die Außenfläche der Ventilwelle (5) und die Innenfläche des ersten Zylinderlochs (4) zusammen eine Mehrheit erster Flüssigkeitskanäle definieren, die über der Ventilwelle (5) gleichweit entfernt verteilt sind.

22. Ein zylindrisches Drehventil in Übereinstimmung mit Anspruch 21, wobei die Mehrheit der ersten Flüssigkeitskanäle von ähnlicher Größe und Konfiguration sind.

23. Ein zylindrisches Drehventil in Übereinstimmung mit Anspruch 16, wobei der Zustand des Mindestflüssigkeitsflusses null ist.

24. Ein Gerät bestehend aus:
einer Druckluftquelle (121) für die Zuführung eines Druckluftstroms zu einer Teilchenzuleitung (130) für die Mischung des Druckluftstroms und grober Schwebstoffe;
einer Düse (132) für die Ausstoßung einer Mischung bestehend aus Druckluft und groben Schwebstoffen; und
einem Drehventil, wie in einem der Ansprüche 16 bis 23 beansprucht, positioniert in der Flüssigkeitsübertragung mit der Druckluftquelle (121) und der Teilchenzuleitung (130), um den Fluss der Druckluft bezüglich der Drehung der Ventilwelle (5) zu steuern.

25. Ein Gerät in Übereinstimmung mit Anspruch 24, wobei das Drehventil sich zwischen der Druckluftquelle (121) und der Teilchenzuleitung (130) befindet.

26. Ein Gerät in Übereinstimmung mit Anspruch 25 für die Verwendung mit den Schwebstoffen, die aus Trockeneisgraupeln bestehen.

27. Ein modulares zylindrisches Drehventilsystem, bestehend aus:
(a) einem Drehventil in Übereinstimmung mit einem der Ansprüche 1 bis 26,
(b) einer austauschbaren, ersten zylindrischen Ventilwelle für die koaxiale Positionierung innerhalb des ersten zylindrischen Lochs, und
(c) einer Außenfläche der ersten zylindrischen Ventilwelle, die ein erstes Kanalprofil definiert, wenn die erste zylindrische Ventilwelle innerhalb des ersten zylindrischen Lochs positioniert wird, die erste zylindrische Ventilwelle ist durch eine zweite zylindrische Ventilwelle austauschbar, welche ein zweites Kanalprofil definiert, wenn die zweite zylindrische Ventilwelle innerhalb des ersten Zylinderlochs positioniert wird, und das erste Kanalprofil ist von dem zweiten Kanalprofil unterscheidbar.

28. Ein modulares, zylindrisches Drehventilsystem in Übereinstimmung mit Anspruch 27, wobei das erste Kanalprofil durch eine erste konvexe Endwand definiert wird, die sich nahtlos mit einer konkaven Kanalseitenfläche (12) verbindet, die genannte konkave Kanalseitenfläche (12) ist nahtlos an eine zweite konvexe Endwand verbunden, die erste konvexe Endwand und die zweite konvexe Endwand sind so umrissen, um ein Abscheren in einer kontrollierten Flüssigkeit zu kontrollieren, und die konkave Kanalseitenfläche definiert ein Querschnittsprofil mit dem ersten zylindrischen Loch (4), das ausgewählt wird, um den Druckverlust der kontrollierten Flüssigkeit innerhalb des Ventils zu minimieren.

29. Ein modulares, zylindrisches Drehventilsystem in Übereinstimmung mit Anspruch 28, wobei die erste konvexe Endwand, die konkave Kanalseitenfläche (12) und die zweite konvexe Endwand jeweils längslaufend durch ein Paar paralleler Seitenwände (11) begrenzt werden.

30. Ein modulares, zylindrisches Drehventilsystem in Übereinstimmung mit Anspruch 28, wobei die konkave Kanalseitenfläche (12) gerundet ist.

31. Ein modulares, zylindrisches Drehventilsystem in Übereinstimmung mit Anspruch 27, wobei das erste Kanalprofil besteht aus:
(a) einem keilförmigen Abschnitt, der mit dem Ausgangskanal (116), wovon mindestens einer vorhanden sein muss, registriert, wenn die Ventilwelle (5) sich in der offenen Position befindet,
(b) einem Querschnittsausgabebereich, der durch den keilförmigen Abschnitt und den Ausgangskanal (116) definiert wird, für die Flüssigkeitsübertragung zwischen dem Ausgangskanal (116) und dem Eingangskanal (114) während der Drehung der Ventilwelle (5) durch die offene Position; und
(c) der Querschnittsausgabebereich definiert einen Mindestquerschnittsbereich des ersten Kanalprofils; und
(d) der Mindestquerschnittsbereich variiert in einem vorbestimmten, nicht linearen Verhältnis zu einem Betrag der Ventilwellendrehung durch die offene Position.

32. Ein modulares, zylindrisches Drehventilsystem in Übereinstimmung mit Anspruch 27, wobei die erste Ventilwelle (5) mindestens ein Temperaturregelloch (6) definiert, das sich entlang der Längsachse erstreckt, und das Temperaturregelloch (6), wovon mindestens eins vorhanden sein muss, mindestens einen längslaufenden Flüssigkeitskanal definiert, der sich zwischen den gegenüberliegenden Enden der Ventilwelle (5) erstreckt.

33. Ein zylindrisches Drehventil in Übereinstimmung mit Anspruch 1, wobei die Ventilwelle (5) in der Lage ist, sich mindestens 360 Grad innerhalb eines Bereichs offener Positionen zu drehen, so dass der erste Flüssigkeitskanal den Eingangskanal (114), wovon mindestens einer vorhanden sein muss, und den Ausgangskanal (116), wovon mindestens einer vorhanden sein muss, für die Flüssigkeitsübertragung verbindet; genannter Bereich besteht aus: einer teilweise offenen Position, wobei der Ausgangskanal (116), wovon mindestens einer vorhanden sein muss, teilweise zum Kanal (7) freigelegt ist, einer vollständigen Position, wobei der Eingangskanal (114), wovon mindestens einer vorhanden sein muss, und der Ausgangskanal (116), wovon mindestens einer vorhanden sein muss, vollständig zum Kanal (7) freigelegt sind, und einer teilweise geschlossenen Position, wo der Eingangskanal (114), wovon mindestens einer vorhanden sein muss, teilweise zum Kanal (7) freigelegt ist; und der erste Flüssigkeitskanal (7) definiert eine Topographie, die aus einer ersten konvexen Endwand besteht, die die Außenfläche mit einer konkaven Kanalseitenfläche (12) verbindet, die konkave Kanalseitenfläche (12) verbindet sich dabei nahtlos mit einer zweiten konvexen Endwand, die erste konvexe Endwand und die zweite konvexe Endwand sind so umrissen, um ein Abscheren in einer kontrollierten Flüssigkeit zu kontrollieren, und die konkave Kanalseitenfläche (12) definiert ein Querschnittsprofil mit dem ersten zylindrischen Loch (4), das ausgewählt wird, um den Druckverlust der kontrollierten Flüssigkeit innerhalb des Ventils zu minimieren.

34. Ein Drehventil in Übereinstimmung mit Anspruch 33, wobei die erste konvexe Endwand, die konkave Kanalseitenfläche (12) und die zweite konvexe Endwand jeweils längs durch ein Paar paralleler Seitenwände (11) begrenzt werden.

35. Ein Drehventil in Übereinstimmung mit Anspruch 33, wobei die Topographie weiterhin einen keilförmigen Abschnitt umfasst, der mit dem Ausgangskanal (116), wovon mindestens einer vorhanden sein muss, registriert, wenn die Ventilwelle (5) sich in der offenen Position befindet, und eine Mindestquerschnittsfreilegung in dem Kanal wird durch eine Öffnung zwischen dem keilförmigen Abschnitt und dem Ausgangskanal (116) während der Drehung der Ventilwelle (5) durch die offene Position definiert, und der genannte Mindestquerschnittsbereich variiert in einem vorbestimmten, nicht linearen Verhältnis zu einem Betrag der Ventilwellendrehung durch die offene Position.

36. Ein Drehventil in Übereinstimmung mit Anspruch 33, wobei die Ventilwelle (5) mit einem selbstschmierenden Material beschichtet ist.

37. Ein Drehventil in Übereinstimmung mit Anspruch 33, wobei die Ventilwelle (5) mit Gleitsitz in das Ventilgehäuse (1) eingepasst ist.

38. Ein Drehventil in Übereinstimmung mit Anspruch 33, wobei die Ventilwelle (5) und das erste zylindrische Loch (4) zusammen eine Reihe von gegenüberliegenden Dichtnuten (8) definieren, die an die gegenüberliegenden Seiten des ersten Flüssigkeitskanals angrenzen, und die Reihe von gegenüberliegenden Dichtnuten (8) nimmt selbstschmierende Dichtungen (9) auf.

39. Ein zylindrisches Drehventil in Übereinstimmung mit Anspruch 1, wobei der erste Flüssigkeitskanal derart umrissen ist, das die Ventilwelle (5) rotiert zwischen:
(i) einer ersten offenen Position, welche die Flüssigkeitsübertragung zwischen dem Eingangskanal und dem ersten Ausgangskanal bereitstellt, (ii) einer zweiten offenen Position, welche die Flüssigkeitsübertragung zwischen dem Eingangskanal und dem zweiten Ausgangskanal bereitstellt, und (iii) einer geschlossenen Position, die die Flüssigkeitsübertragung zwischen dem Eingangskanal und beiden Ausgangskanälen begrenzt.

40. Ein Drehventil in Übereinstimmung mit Anspruch 39, wobei die Ventilwelle (5) mit einem selbstschmierenden Material beschichtet ist.

41. Ein Drehventil in Übereinstimmung mit Anspruch 39, wobei die Ventilwelle (5) mit Gleitsitz in das Ventilgehäuse (1) eingepasst ist.

42. Ein Drehventil in Übereinstimmung mit Anspruch 39, wobei die Ventilwelle (5) und das erste zylindrische Loch (4) zusammen eine Reihe von gegenüberliegenden Dichtnuten (8) definieren, die an die gegenüberliegenden Seiten des ersten Flüssigkeitskanals angrenzen, und die Reihe von gegenüberliegenden Dichtnuten (8) nimmt selbstschmierende Dichtungen (9) auf.

43. Ein zylindrisches Drehventil in Übereinstimmung mit Anspruch 1, wobei der erste Flüssigkeitskanal derart umrissen ist, dass die Ventilwelle (5) rotiert zwischen:
(i) einer geschlossenen Position zur Begrenzung der Flüssigkeitsübertragung zwischen dem Ausgangskanal und beiden Eingangskanälen, (ii) einer Reihe von Positionen zum Mischen verschiedener Verhältnisse von Flüssigkeitsströmen, welche über den ersten und zweiten Eingangskanal übertragen werden, für die Flüssigkeitsübertragung mit dem Ausgangskanal, und (iii) einer ersten, vollständig einseitigen Position für die Flüssigkeitsübertragung zwischen dem Ausgangskanal und dem ersten Eingangskanal, und einer zweiten, vollständig einseitigen Position für die Flüssigkeitsübertragung zwischen dem Ausgangskanal und dem zweiten Eingangskanal.

44. Ein Drehventil in Übereinstimmung mit Anspruch 43, wobei die Ventilwelle (5) mit einem selbstschmierenden Material beschichtet ist.

45. Ein Drehventil in Übereinstimmung mit Anspruch 43, wobei die Ventilwelle (5) mit Gleitsitz in das Ventilgehäuse (1) eingepasst ist.

46. Ein Drehventil in Übereinstimmung mit Anspruch 43, wobei die Ventilwelle (5) und das erste zylindrische Loch (4) zusammen eine Reihe von gegenüberliegenden Dichtnuten (8) definieren, die an die gegenüberliegenden Seiten des ersten Flüssigkeitskanals angrenzen, und die Reihe von gegenüberliegenden Dichtnuten (8) nimmt selbstschmierende Dichtungen (9) auf.

47. Ein Drehventil in Übereinstimmung mit Anspruch 1 bis 46, wobei das Drehventil eine Mehrheit von ersten Flüssigkeitskanälen umfasst, die längs entlang der Ventilwelle (5) positioniert sind, und jeder erste Flüssigkeitskanal entspricht einer Reihe von mindestens einem Eingangskanal (114) und mindestens einem entsprechendem Ausgangskanal (116).

## Revendications

1. Une valve rotative cylindrique composée de
(a) un corps de valve (1) qui forme au moins un canal d'entrée (114) et au moins un canal de sortie (116), chaque canal proposant un passage de communication de fluide séparée entre une surface extérieure du corps de valve (1) et un premier trou cylindrique (4) qui s'étend le long d'un axe longitudinal qui est formé par le corps de valve (1),
(b) une tige de valve cylindrique (5) positionnée co-axialement à l'intérieur du premier trou cylindrique (4),
(c) un premier canal de fluide (7) qui s'étend le long d'une surface extérieure de la tige de valve cylindrique (5),
(d) la tige de valve (5) qui est en rotation entre une position fermée et une position ouverte de façon que, lorsque la tige de valve (5) se trouve en position ouverte, le premier canal de fluide associe au moins un canal d'entrée (114) et au moins un canal de sortie (116) pour la communication de fluide,
**caractérisée en ce que**
(e) la tige de valve (5) forme au moins un trou de régulation de température (6) qui s'étend le long de l'axe longitudinal, au moins un trou de régulation de température (6) au moins formant un canal de fluide passant longitudinalement qui s'étend entre les deux extrémités opposées de la tige de valve (5).

2. Valve rotative selon la revendication 1 **caractérisée en ce qu'**au moins le trou de régulation (6) forme une voie d'écoulement pour un fluide thermoconducteur.

3. Valve rotative selon la revendication 1 **caractérisée en ce que** le canal (7) forme une topographie aux contours lisses.

4. Valve rotative selon la revendication 3 **caractérisée en ce que** la topographie est formée par une première paroi d'extrémité convexe qui s'associe directement à une surface latérale de canal (12) concave, ladite surface latérale de canal (12) s'associant directement à une deuxième paroi d'extrémité convexe.

5. Valve rotative selon la revendication 4 **caractérisée en ce que** la première paroi d'extrémité convexe et la deuxième paroi d'extrémité convexe sont réalisées de façon à empêcher un effet de cisaillement dans un fluide contrôlé.

6. Valve rotative selon la revendication 4 **caractérisée en ce que** la surface latérale de canal (12) forme un profil de section transversale avec le premier trou cylindrique (4) qui a été choisi pour réduire au maximum une perte de pression du fluide contrôlée dans la valve.

7. Valve rotative selon la revendication 4 **caractérisée en ce que** la première paroi d'extrémité convexe, la surface latérale de canal (12) et la deuxième paroi d'extrémité convexe sont délimitées longitudinalement par une paire de parois latérales parallèles (11).

8. Valve rotative selon la revendication 4 **caractérisée en ce que** la surface latérale de canal (12) concave est arrondie.

9. Valve rotative selon la revendication 1 **caractérisée en ce que** le canal (7) forme une topographie composée comme suit:
une partie cunéiforme qui est reliée à au moins un canal de sortie (116) lorsque la tige de valve cylindrique (5) se trouve en position ouverte, et
une section transversale minimale dans le canal (7) est formée par une ouverture entre la partie cunéiforme et le canal de sortie (116) pendant la rotation de la tige de valve (5) par la position ouverte et ladite section de section transversale minimale varie dans un rapport prédéterminé non linéaire par rapport à une valeur de la rotation de la tige de valve par la position ouverte.

10. Valve rotative selon la revendication 1 **caractérisée en ce que** la valve rotative forme une valve d'arrêt et que le corps de valve (1) possède exactement un canal d'entrée (114) et exactement un canal de sortie (116).

11. Valve rotative selon la revendication 1 **caractérisée en ce que** la valve rotative forme une valve de circulation d'air ; le corps de valve (1) ayant exactement un canal d'entrée et deux canaux de sortie; et le canal de fluide étant réalisé de façon que la tige de valve (5) puisse pivoter entre: (i) une première position ouverte qui prépare la communication de fluide entre le canal d'entrée et un premier canal de sortie des deux canaux de sortie, (ii) une deuxième position ouverte qui prépare la communication de fluide entre le canal d'entrée et un deuxième canal de sortie des deux canaux de sortie ; et (iii) une position fermée qui délimite la communication de fluide entre le canal d'entrée et les deux canaux de sortie.

12. Valve rotative selon la revendication 1 **caractérisée en ce que** la valve rotative forme une valve mélangeuse (91) ;
le corps de valve (1) possédant exactement deux canaux d'entrée et un canal de sortie et le canal de fluide étant réalisé de façon que la tige de valve (5) puisse pivoter entre :
(i) une position fermée qui délimite la communication de fluide entre le canal de sortie et les deux canaux d'entrée, (ii) une série de positions pour le mélange de différents rapports des flux de fluide qui passent via le premier et le deuxième canal d'entrée pour la communication de fluide avec le canal de sortie et (iii) une première position entièrement inclinée pour la communication de fluide entre le canal de sortie et le premier canal d'entrée et une deuxième position entièrement inclinée pour la communication de fluide entre le canal de sortie et le deuxième canal d'entrée.

13. Valve rotative selon la revendication 1 **caractérisée en ce que** la tige de valve (5) est revêtue d'une matière auto-lubrifiante.

14. Valve rotative selon la revendication 1 **caractérisée en ce que** la tige de valve (5) s'introduit dans le corps de valve (1) avec un ajustement glissant.

15. Valve rotative selon la revendication 1 **caractérisée en ce que** la tige de valve (5) et le premier trou cylindrique (4) forment ensemble une rangée de rainures d'étanchéité opposées (8) qui jouxtent les côtés opposés du premier canal de fluide et la rangée de rainures d'étanchéité opposées (9) loge les joints auto-lubrifiants.

16. Valve rotative selon la revendication 1 **caractérisée en ce que**
a) la tige de valve (5) peut être utilisée pour générer une fréquence d'ondes de fluide prédéterminée, et
b) un ou plusieurs premiers canaux de fluide (7) sont formés par une surface extérieure de la tige de valve (5) et une surface intérieure du premier trou cylindrique (4) ; le premier canal de fluide ou les plusieurs premiers canaux de fluide (7) s'étend/s'étendent transversalement au-dessus de l'axe longitudinal,
le premier canal de fluide ou les plusieurs premiers canaux de fluide (7) forment respectivement une première ouverture pour la communication de fluide entre au moins un canal d'entrée (114) et au moins un canal de sortie (116), la dimension de la première ouverture variant pendant la rotation de la tige de valve (5) de façon que, lorsque la tige de valve (5) tourne, un ou plusieurs canaux de fluide (7) réalise l'un après l'autre au moins un canal d'entrée (114) et au moins un canal de sortie (116) à travers un cycle de communication de fluide, qui se compose comme suit : (i) un état d'un flux de fluide croissant ; (ii) un état d'un flux de fluide maximum ; (iii) un état d'un flux de fluide décroissant, et (iv) un état d'un flux de fluide minimum.

17. Valve rotative selon la revendication 16 **caractérisée en ce que** la tige de valve (5) est revêtue d'une matière auto-lubrifiante.

18. Valve rotative selon la revendication 16 **caractérisée en ce que** la tige de valve (5) s'introduit dans le corps de valve (1) avec un ajustement glissant.

19. Valve rotative selon la revendication 16 **caractérisée en ce que** la tige de valve (5) et le premier trou cylindrique (4) forment ensemble une rangée de rainures d'étanchéité opposées (8) qui jouxtent les côtés opposés du premier canal de fluide et la rangée de rainures d'étanchéité opposées (8) loge les joints auto-lubrifiants (9).

20. Valve rotative selon la revendication 16 **caractérisée en ce que** la tige de valve (5) forme au moins un trou de régulation de température (6) qui s'étend le long de l'axe longitudinal et entre les extrémités opposées de la tige de valve (5).

21. Valve rotative selon la revendication 16 **caractérisée en ce que** la surface extérieure de la tige de valve (5) et la surface intérieure de premier trou cylindrique (4) ensemble forment une quantité de premiers canaux de fluide qui sont répartis via la tige de valve (5) de façon équidistante.

22. Valve rotative selon la revendication 21 **caractérisée en ce que** la quantité des premiers canaux de fluide sont de même taille et de même configuration.

23. Valve rotative selon la revendication 16 **caractérisée en ce que** l'état du flux de fluide minimum est zéro.

24. Un appareil composé de :
une source d'air comprimé (121) pour l'alimentation d'un flux d'air comprimé vers une conduite de particules (130) pour le mélange du flux d'air comprimé et de matières grosses en suspension ;
une buse (132) pour le rejet d'un mélange du flux composé d'air comprimé et de matières grosses en suspension ; et
une valve rotative comme revendiquée dans l'une des revendications 16 à 23, positionnée dans la communication de fluide avec la source d'air comprimé (121) et la conduite de particules (130) pour piloter le flux de l'air comprimé pour la rotation de la tige de valve (5).

25. Appareil selon la revendication 24 **caractérisé en ce que** la valve rotative se trouve entre la source d'air comprimé (121) et la conduite de particules (130).

26. Appareil selon la revendication 25 pour l'utilisation avec des matières en suspension qui se composent de grésils de neige carbonique.

27. Système de valve rotative cylindrique modulaire composé de :
(a) une valve rotative selon l'une des revendications 1 à 26,
(b) une première tige de valve cylindrique remplaçable pour le positionnement co-axial dans le premier trou cylindrique, et
(c) une surface extérieure de la première tige de valve cylindrique qui forme un premier profil de canal lorsque la première tige de valve cylindrique est positionnée dans le premier trou cylindrique, la première tige de valve cylindrique est remplaçable par une deuxième tige de valve cylindrique qui forme un deuxième profil de canal lorsque la deuxième tige de valve cylindrique est positionnée dans le premier trou cylindrique et le premier profil de canal peut se différencier du deuxième profil de canal.

28. Système de valve rotative cylindrique modulaire selon la revendication 27 **caractérisé en ce que** le premier profil de canal est formé par une paroi d'extrémité concave qui s'associe de façon lisse à une surface latérale de canal (12) concave, ladite surface latérale de canal (12) concave est associée de façon lisse à une deuxième paroi d'extrémité convexe, la première paroi d'extrémité convexe et la deuxième paroi d'extrémité convexe sont réalisées de façon à empêcher un effet de cisaillement dans un fluide contrôlé, et la surface latérale de canal concave forme un profil de section avec le premier trou cylindrique (4) qui a été choisi pour réduire au maximum une perte de pression du fluide contrôlée dans la valve.

29. Système de valve rotative modulaire selon la revendication 28 **caractérisé en ce que** la première paroi d'extrémité convexe, la surface latérale de canal (12) et la deuxième paroi d'extrémité convexe sont délimitées longitudinalement par une paire de parois latérales parallèles (11).

30. Système de valve rotative selon la revendication 28 **caractérisé en ce que** la surface latérale de canal (12) concave est arrondie.

31. Système de valve rotative modulaire selon la revendication 27 **caractérisé en ce que** le premier profil de canal se compose de :
(a) une partie cunéiforme qui est reliée à au moins un canal de sortie (116) lorsque la tige de valve (5) se trouve en position ouverte,
(b) une section transversale de sortie, qui est formée par la section cunéiforme et le canal de sortie (116), pour la communication de fluide entre le canal de sortie (116) et le canal d'entrée (114) pendant la rotation de la tige de valve (5) à travers la position ouverte ; et
(c) la section transversale de sortie forme une section transversale minimale du premier profil de canal ; et
(d) la section transversale minimale varie dans un rapport prédéterminé non linéaire par rapport à une valeur de la rotation de la tige de valve à travers la position ouverte.

32. Système de tige de valve cylindrique modulaire (5) selon la revendication 27 **caractérisé en ce que** la première tige de valve (5) forme au moins un trou de régulation de température (6) qui s'étend le long de l'axe longitudinal, au moins le trou de régulation de température (6) forme au moins un canal de fluide passant longitudinalement qui s'étend entre les deux extrémités opposées de la tige de valve (5).

33. Valve rotative cylindrique selon la revendication 1 **caractérisée en ce que** la tige de valve (5) est à même de tourner au moins sur 360 degrés dans une section de positions ouvertes de façon que le premier canal de fluide associe au moins un canal d'entrée (114) et au moins un canal de sortie (116) pour la communication de fluide ; ladite section se compose d'une position partiellement ouverte, au moins le canal de sortie (116) étant en partie exposé vers le canal (7), d'une position complète, au moins un canal d'entrée (114) et au moins un canal de sortie (116) étant complètement exposés vers le canal (7) et d'une position partiellement fermée où au moins un canal d'entrée (114) est partiellement exposé vers le canal (7) ; et le premier canal de fluide (7) formant une topographie se composant d'une première paroi d'extrémité convexe qui associe la surface extérieure à une surface latérale de canal (12) concave, la surface latérale de canal (12) concave étant associée directement à une deuxième paroi d'extrémité convexe, la première paroi d'extrémité convexe et la deuxième paroi d'extrémité convexe étant réalisées de façon à empêcher un effet de cisaillement dans un fluide contrôlé, et la surface latérale de canal (12) concave formant un profil de section transversale avec le premier trou cylindrique (4) qui a été choisi pour réduire au maximum une perte de pression du fluide contrôlée dans la valve.

34. Valve rotative selon la revendication 33 **caractérisée en ce que** la première paroi d'extrémité convexe, la surface latérale de canal (12) et la deuxième paroi d'extrémité convexe sont délimitées longitudinalement par une paire de parois latérales parallèles (11).

35. Valve rotative selon la revendication 33 **caractérisée en ce que** la topographie inclut encore une section cunéiforme qui est reliée à au moins un canal de sortie (116) lorsque la tige de valve (5) se trouve dans la position ouverte et qu'une exposition de section transversale minimale dans le canal est formé à travers une ouverture entre la section cunéiforme et le canal de sortie (116) pendant la rotation de la tige de valve (5) par la position ouverte et que la section transversale minimale varie dans un rapport prédéterminé non linéaire par rapport à une valeur de la rotation de la tige de valve à travers la position ouverte.

36. Valve rotative selon la revendication 33 **caractérisée en ce que** la tige de valve (5) est revêtue d'une matière auto-lubrifiante.

37. Valve rotative selon la revendication 33 **caractérisée en ce que** la tige de valve (5) s'introduit dans le corps de valve (1) avec un ajustement glissant.

38. Valve rotative selon la revendication 33 **caractérisée en ce que** la tige de valve (5) et le premier trou cylindrique (4) forment ensemble une rangée de rainures d'étanchéité opposées (8) qui jouxtent les côtés opposés du premier canal de fluide et la rangée de rainures d'étanchéité opposées (8) loge les joints auto-lubrifiants (9).

39. Valve rotative selon la revendication 1 **caractérisée en ce que**
le premier canal de fluide est réalisé de façon que la tige de valve (5) soit en rotation entre :
(i) une première position ouverte qui prépare la communication de fluide entre le canal d'entrée et le premier canal de sortie, (ii) une deuxième position ouverte qui prépare la communication de fluide entre le canal d'entrée et le deuxième canal de sortie; et (iii) une position fermée qui délimite la communication de fluide entre le canal d'entrée et les deux canaux de sortie.

40. Valve rotative selon la revendication 39 **caractérisée en ce que** la tige de valve (5) est revêtue d'une matière auto-lubrifiante.

41. Valve rotative selon la revendication 39 **caractérisée en ce que** la tige de valve (5) s'introduit dans le corps de valve (1) avec un ajustement glissant.

42. Valve rotative selon la revendication 39 **caractérisée en ce que** la tige de valve (5) et le premier trou cylindrique (4) forment ensemble une rangée de rainures d'étanchéité opposées (8) qui jouxtent les côtés opposés du premier canal de fluide et la rangée de rainures d'étanchéité opposées (8) loge les joints auto-lubrifiants (9).

43. Valve rotative cylindrique selon la revendication 1 **caractérisée en ce que** le premier canal de fluide est réalisé de façon que la tige de valve (5) est en rotation entre :
(i) une position fermée qui délimite la communication de fluide entre le canal de sortie et les deux canaux d'entrée, (ii) une série de positions pour le mélange en différents rapports des flux de fluide qui sont véhiculés via le premier et le deuxième canal d'entrée pour la communication de fluide avec le canal de sortie et (iii) une première position entièrement unilatérale pour la communication de fluide entre le canal de sortie et le premier canal d'entrée et une deuxième position entièrement unilatérale pour la communication de fluide entre le canal de sortie et le deuxième canal d'entrée.

44. Valve rotative selon la revendication 43 **caractérisée en ce que** la tige de valve (5) est revêtue d'une matière auto-lubrifiante.

45. Valve rotative selon la revendication 43 **caractérisée en ce que** la tige de valve (5) s'introduit dans le corps de valve (1) avec un ajustement glissant.

46. Valve rotative selon la revendication 43 **caractérisée en ce que** la tige de valve (5) et le premier trou cylindrique (4) forment ensemble une rangée de rainures d'étanchéité opposées (8) qui jouxtent les côtés opposés du premier canal de fluide et la rangée de rainures d'étanchéité opposées (8) loge les joints auto-lubrifiants (9).

47. Valve rotative selon les revendications 1 à 46 **caractérisée en ce que** la valve rotative comprend une quantité de premiers canaux de fluide qui sont positionnés le long de la tige de valve (5) et chaque premier canal de fluide correspond à une série d'au moins un canal d'entrée (114) et au moins un canal de sortie (116) correspondant.
